# EUROPÄISCHE PATENTSCHRIFT

(11) **EP 0 877 209 B1**
(45) Veröffentlichungstag und Bekanntmachung des Hinweises auf die Patenterteilung: **05.01.2005**
(21) Anmeldenummer: 98108272.0
(22) Anmeldetag: 06.05.1998
(51) Int. Cl.: F24F 11/00, F24F 7/06, F24F 3/044

(54) **Belüftungsvorrichtung für ein Gebäude**
Ventilation device for a building
Dispositif de ventilation pour un bâtiment

(30) Priorität: 07.05.1997 DE 19719367; 07.05.1997 DE 29708247 U; 11.06.1997 JP 15359997; 30.06.1997 US 884763
(43) Veröffentlichungstag der Anmeldung: 11.11.1998
(73) Patentinhaber: Mann, Gerd, Dipl.-Ing., 80469 München (DE)
(72) Erfinder: Mann, Gerd, Dipl.-Ing., 80469 München (DE)
(74) Vertreter: Herzog, Markus, Dipl.-Phys. Dr.

(56) Entgegenhaltungen:
- US-A- 2 282 210
- US-A- 4 323 113
- US-A- 4 392 417
- US-A- 5 554 071

## Beschreibung

Die Erfindung betrifft ein niedriges Gebäude, insbesondere ein Einfamilienhaus, mit wenigstens einem mit der äußeren Umgebung in Luftübertrittsverbindung stehenden Lüftungshauptkanal und wenigstens einem Verteilerkanal, weicher zum einen mit dem wenigstens einen Lüftungshauptkanal und zum anderen mit Räumen des Gebäudes in Luftübertrittsverbindung steht, wobei die Räume ihrerseits mit der äußeren Umgebung des Gebäudes in Luftübertrittsverbindung stehen.

Die vom Stand der Technik aufgeworfenen Probleme werden im folgenden zunächst am Beispiel von Hochhäusem diskutiert und erläutert werden.

Das Wohlbehagen von sich in einem Gebäude aufhaltenden Personen hängt unter anderem auch davon ab, ob grundsätzlich die Möglichkeit besteht, in den Räumen des Gebäudes die Fenster zu öffnen, um Frischluft in den Raum strömen zu lassen. Insbesondere im Frühling erhöht es das Lebensgefühl, wenn man nach der langen Winterzeit endlich wieder einmal bei geöffnetem Fenster arbeiten kann. Das Öffnen der Fenster ist aber bei Hochhäusern nur unter sehr eingeschränkten Bedingungen möglich, da sich bei hohen Gebäuden regelmäßig extreme Druck-/Sog-Zustände einstellen, die einerseits durch äußere Windströmungen und andererseits durch gebäude-interne Thermik bedingt sind.

Insbesondere in Hochhäusern, aber auch in niedrigen Gebäuden kann die Fensterlüftung deshalb zu Situationen führen, die von den sich in dem Gebäude aufhaltenden Personen als unangenehm empfunden werden oder deren Sicherheit gefährden, und die nur mit hohem technischen Aufwand einigermaßen beherrscht werden können. So kann sich bei starkem Wind auf der Luvseite des Gebäudes selbst bei geschlossenen Fenstern ein Druckunterschied zwischen den Räumen und den Fluren aufbauen, der ein Öffnen der Türen durch Personen mit durchschnittlichen Kräften unmöglich macht. Zu berücksichtigen ist dabei, daß sich die Türen aufgrund von Feuerschutzvorschriften in die Räume hinein öffnen müssen, um die Flure als Fluchtwege freizuhalten. Im Extremfall, beispielsweise bei Feuer, wird den sich in dem jeweiligen Raum aufhaltenden Personen hierdurch also der Fluchtweg abgeschnitten.

Aus diesem Grunde wurden bei Hochhäusern in der Regel geschlossene Fassaden sowie künstliche Be- und Entlüftung bzw. Klimatisierung der Räume vorgesehen, d.h. Frischluft wird in die Räume gepumpt und verbrauchte Luft wird aus den Räumen abgesaugt. Die allgemein bekannten Nachteile solcher Gebäude werden in der Fachwelt üblicherweise unter dem Schlagwort "sick building syndrome" zusammengefaßt. Da Flure und an diese angrenzende Räume gleichermaßen behandelt werden, kann sich in einem Raum infolge eines Brandes entwickelnder Rauch in die Flure des Gebäudes ausbreiten und dort die Evakuierung der sich in dem Gebäude aufhaltenden Personen zumindest erheblich behindern.

Zur Lösung dieses Problems wurden bereits verschiedene Maßnahmen getroffen:

So werden Hochhäuser neuerdings nicht mit einer Einfachfassade, sondern mit einer Doppelfassade gebaut. Aufgabe des äußeren Fassadenteils ist es dabei, die Kraft des anstehenden Winds zu brechen, dessen Druckkräfte aufzunehmen und nur begrenzte Luftmengen in die Räume eindringen zu lassen. Dies hatte Jedoch nur teilweise die gewünschte Wirkung, da sich nach wie vor zwischen der Luv-Seite und der Lee-Seite des Gebäudes ein, wenn auch geringerer, Druckunterschied aufbaute, der im Ernstfall das Öffnen der Türen zumindest beträchtlich erschwerte.

Als ergänzende Maßnahme wurde daher der äußere Fassadenteil mit einer Vielzahl von motorisch betätigbaren Klappen versehen, die in Abhängigkeit von der Windrichtung von einer Steuereinheit geöffnet und geschlossen werden können. Durch Öffnen dieser Klappen kann der vom anstehenden Wind erzeugte Druck auf der Luv-Seite des Gebäudes in den Zwischenraum zwischen innerem und äußerem Fassadenteil eindringen, sich in diesem Zwischenraum um das gesamte Gebäude herum ausbreiten, und so den Druckunterschied zwischen Luv-Seite und Lee-Seite des Gebäudes zumindest deutlich herabsetzen. Aber auch diese Maßnahme hatte nicht für alle Windstärken den gewünschten Erfolg, so daß die Türen zusätzlich mit Servomotoren zur Unterstützung der Öffnungsbewegung ausgestattet wurden. Um den Einsatz der motorisch betätigbaren Klappen sowie der Tür-Servomotoren auch im Brandfalle sicherstellen zu können, muß zur Erfüllung der Feuerschutzvorschriften ein entsprechend dimensioniertes Notstromaggregat vorgesehen sein.

Doppelfassaden haben darüber hinaus den Nachteil, daß sich die in dem Zwischenraum zwischen innerem und äußerem Fassadenteil befindende Luft bei Sonneneinstrahlung stark erwärmt, bevor sie in die Räume des Gebäudes gesogen wird. Diese Wärmezufuhr wird insbesondere in den Sommermonaten als unangenehm empfunden und macht den Einsatz zusätzlicher Kühleinrichtungen erforderlich.

Dokument US 2,282,210 beschreibt eine Belüftungsvorrichtung für ein Haus mit einer Mehrzahl von Bereichen oder Stockwerken, bei der durch einen Kern des Hauses Luft zugeführt wird, die durch ein von innen nach außen abfallendes Druckprofil abströmt. Hierbei wird allerdings insbesondere für die Klimatisierung der dem Haus zugeführten Luft sehr viel Technik eingesetzt.

Demgegenüber ist es Aufgabe der vorliegenden Erfindung, ein niedriges Gebäude, insbesondere ein Einfamilienhaus, der gattungsgemäßen Art anzugeben, dessen Belüftungsanlage konstruktiv und steuerungstechnisch einfach aufgebaut ist.

Diese Aufgabe wird bei einem niedrigen Gebäude der gattungsgemäßen Art dadurch gelöst, daß wenigstens ein mit der äußeren Umgebung in Luftübertrittsverbindung stehender Lüftungshauptkanal und wenigstens ein Verteilerkanal vorgesehen ist, welcher zum einen mit dem wenigstens einen Lüftungshauptkanal und zum anderen mit Räumen des Gebäudes in Luftübertrittsverbindung steht, wobei die Räume ihrerseits mit der äußeren Umgebung des Gebäudes in Luftübertrittsverbindung stehen, wobei dem wenigstens einen Lüftungshauptkanal eine Belüftungsvorrichtung zugeordnet ist zum Erzeugen oder/und Aufrechterhalten eines Belüftungsdrucks, dessen Wert größer ist als der Wert des in der äußeren Umgebung herrschenden Drucks, wobei zwischen dem wenigstens einen Verteilerkanal und einem mit diesem in Luftübertrittsverbindung stehenden Raum und/oder zwischen wenigstens einem der Räume und der äußeren Umgebung eine von Hand verstellbare Vorrichtung vorgesehen ist zum Verändern des Luftdurchlassquerschnitts, wobei diese Vorrichtung zum Verändern des Luftdurchlassquerschnitts einen endlich minimalen Luftdurchlassquerschnitt aufweist, und wobei der wenigstens eine Lüftungshauptkanal einen durch das Erdreich bzw. durch einen mit dem Erdreich in Wärmeaustausch stehendes Baukonstruktionsteil verlaufenden Kanalabschnitt aufweist. In dem erfindungsgemäßen Gebäude wird also mittels der Belüftungsvorrichtung ein Überdruck erzeugt, der zu einer Luftströmung von dem wenigstens einen Lüftungshauptkanal über den wenigstens einen Verteilerkanal in die Räume und von dort unmittelbar in die äußere Umgebung führt. Der Wert der Druckdifferenz zwischen dem Innendruck des Gebäudes und dem Umgebungsdruck kann beispielsweise zwischen 10 Pa und 80 Pa, vorzugsweise etwa 30 Pa, betragen.

Aufgrund dieser im Vergleich zu den Gebäuden des Stands der Technik umgekehrten Luftströmungsrichtung herrscht bei geschlossenen Raumtüren in den Fluren des Gebäudes ein höherer Luftdruck als in den an diese Flure angrenzenden Räumen. Hierdurch ist zum einen sichergestellt, daß die sich aus feuertechnischen Gründen in die Räume öffnenden Türen jederzeit problemlos geöffnet werden können.

Wird die in den Raum führende Tür geöffnet, so kommt es hierdurch lediglich zu einer verstärkten Frischluftzufuhr in dem Raum, im Extremfall zu einem Druckausgleich zwischen Raum und Flur, wobei die Belüftungsvorrichtung durch zeitweilige Erhöhung der Förderleistung dafür sorgt, daß der Gesamtdruck auf den für den Flur vorgesehenen Druckwert stabilisiert wird. Wird die Tür wieder geschlossen, so sinkt der Innendruck des Raums allmählich wieder auf einen zwischen dem Flurdruck und dem Umgebungsdruck liegenden Druckwert ab.

Wird das Fenster eines Raums geöffnet, so kommt es im Extremfall zu einem Druckausgleich zwischen der äußeren Umgebung und dem Raum. Dies ist jedoch zum einen sicherheitstechnisch unproblematisch, da sichergestellt ist, daß der Druck in den Fluren des Gebäudes größer ist als der in der äußeren Umgebung herrschende Druck, so daß auch in diesem Fall die Türen problemlos geöffnet werden können. Zum anderen führt die geringfügig höhere Druckdifferenz zwischen Flur und Raum lediglich zu einem entsprechenden Anstieg der Luftströmungsrate durch den Raum, worauf die Belüftungsanlage im Bedarfsfalle mit einem entsprechenden Anstieg der Förderleistung reagiert.

Ist beim Öffnen der in den Raum führenden Tür das Fenster bereits geöffnet oder wird bei geöffneter Tür zusätzlich auch das Fenster geöffnet, so kommt es aufgrund des Druckunterschieds zwischen Flur und äußerer Umgebung zu einem Luftzug in dem Raum, und dies umso mehr, als die Belüftungsvorrichtung auf die genannten Tür- und Fensteröffnungsverhältnisse mit einer Erhöhung der Luftdurchsatzleistung reagiert. Dieser Luftzug wird von den sich in dem Raum aufhaltenden Personen als unangenehm empfunden, so daß schon nach kurzer Zeit die Tür oder/und das Fenster wieder geschlossen wird. Infolge der erhöhten Förderleistung der Belüftungsvorrichtung stellen sich die gewünschten Druckverhältnisse schon bald wieder ein, woraufhin die Belüftungsvorrichtung ihre Förderleistung wieder absenkt.

Werden auf der Luv-Seite des Gebäudes gleichzeitig sowohl die Tür als auch das Fenster geöffnet, so kann sich der anstehende Winddruck bis in den Flur ausbreiten. Dort kommt es aber allenfalls zu einer weiteren Erhöhung des ohnehin erwünschten Überdrucks, worauf die Belüftungsvorrichtung mit einer Absenkung ihrer Förderleistung reagiert. Nachteilige Auswirkungen auf die an diesen Flur angrenzenden anderen Räume können nicht auftreten. Der durch den Raurn, in den Flur fegende Windstoß wird wiederum von den sich im Raum aufhaltenden Personen als unangenehm empfunden, so daß sie alsbald Tür oder/und Fenster schließen, wenn die Tür nicht schon zuvor von dem Windstoß zugeschlagen worden ist. Auch in diesem Fall stellen sich die gewünschten Druckverhältnisse selbsttätig wieder her.

Auch in feuerschutztechnischer Hinsicht kommt der von der erfindungsgemäßen Belüftungsvorrichtung vorgegebenen Luftströmungsrichtung von den Fluren durch die Räume zur äußeren Umgebung hin besondere Bedeutung zu. Die überwiegende Mehrzahl von Bränden entsteht nämlich in den Räumen eines Gebäudes. Kommt es in Verbindung mit dem Brand zu Rauchentwicklung, so wird dieser Rauch bei dem erfindungsgemäßen Gebäude unmittelbar aus dem Raum in die äußere Umgebung gedrückt und nicht etwa in die Flure des Gebäudes. Gelangt bei der Flucht von Personen aus dem brennenden Raum etwas Rauch in den Flur, so wird dieser über die benachbarten Räume wieder aus dem Flur und weiter in die äußere Umgebung gefördert. Bei dem erfindungsgemäßen Gebäude ist also die Rauchfreiheit der Fluchtwege sichergestellt.

Weiterhin ist erfindungsgemäß vorgesehen, daß zwischen dem wenigstens einen Verteilerkanal und einem mit diesem in Luftübertrittsverbindung stehenden Raum oder/und zwischen wenigstens einem der Räume und der äußeren Umgebung eine von Hand verstellbare Vorrichtung vorgesehen ist zum Verändern des Luftdurchlaßquerschnitts, wobei diese Vorrichtung zum Verändern des Luftdurchlaßquerschnitts einen endlich minimalen Luftdurchlaßquerschnitt aufweist. Mit Hilfe dieser Einstellvorrichtungen können die sich in einem Raum befindenden Personen die Frischluftzufuhr ihren persönlichen Wünschen und Bedürfnissen individuell anpassen, und zwar unabhängig von den jeweiligen Verhältnissen in benachbarten Räumen. Eine Vergrößerung des Luftdurchlaßquerschnitts führt zu einer zeitweiligen Druckabsenkung im angrenzenden Flur, die letztendlich nur eine Erhöhung der Förderleistung der Belüftungsvorrichtung zur Folge hat. Die zwischen dem Raum und der äußeren Umgebung angeordnete Vorrichtung zum Verändern des Luftdurchlaßquerschnitts kann beispielsweise von dem Fenster des Raums gebildet sein.

Zusätzlich ist bei der vorliegenden Erfindung vorgesehen, daß wenigstens ein Lüftungshauptkanal einen durch das Erdreich verlaufenden Kanalabschnitt aufweist. Da das Erdreich im Winter üblicherweise eine höhere Temperatur aufweist als die äußere Umgebung und im Sommer üblicherweise eine niedrigere Temperatur aufweist als die äußere Umgebung, wird die in das Gebäude gesaugte Luft in dem durch das Erdreich verlaufenden Kanalabschnitt im Winter erwärmt und im Sommer abgekühlt. Somit kann die in das Gebäude gesaugte Luft zur Klimatisierung des Gebäudes genutzt werden. Dies führt zum einen zu einer Senkung der Heiz- bzw. Kühlenergie und somit der damit verbundenen. Kosten. Zum anderen ermöglicht es die Klimatisierung des Gebäudes ohne den Einsatz von geräuschintensiven oder gar mit FCKW (Fluorchlorkohlenwasserstoff) oder sonstigen umweltbelastenden Stoffen arbeitenden Klimaanlagen.

Zur Erhöhung bzw. Absenkung der Förderleistung der Belüftungsvorrichtung kann beispielsweise eine Steuereinheit vorgesehen sein. Um das Maß des von der erfindungsgemäßen Belüftungsvorrichtung in dem Gebäude erzeugten bzw. aufrechterhaltenen Überdrucks auf einem möglichst geringen Wert halten zu können, wird vorgeschlagen, daß an der Außenseite des Gebäudes sowie in dem wenigstens einen Verteilerkanal oder/und dem wenigstens einen Lüftungshauptkanal Drucksensoren vorgesehen sind zur Erfassung des am jeweiligen Ort herrschenden Luftdrucks. Mit Hilfe dieser Drucksensoren können beispielsweise Änderungen des in der äußeren Umgebung herrschenden Drucks erfaßt werden, die entweder von der allgemeinen Wetterlage (Hochdruckgebiet, Tiefdruckgebiet) oder auch von der jeweiligen Windsituation (dynamischer Winddruck) herrühren. So kann beispielsweise sichergestellt werden, daß auch auf der Luv-Seite des Gebäudes der Innendruck dieses Gebäudes einen höheren Wert aufweist als der äußere Umgebungsdruck einschließlich des Winddrucks.

Zur Verfeinerung der Steuerungsmöglichkeiten wird weiter vorgeschlagen, daß das Gebäude in eine Mehrzahl von Belüftungssektoren unterteilt ist, denen jeweils mindestens ein Lüftungshauptkanal zugeordnet ist. Dabei können sowohl in vertikaler Richtung voneinander getrennte Belüftungssektoren als auch in horizontaler Richtung getrennte Belüftungssektoren vorgesehen sein. Durch in Vertikalrichtung getrennte Belüftungssektoren kann auf den mit zunehmender Höhe abnehmenden stationären Umgebungsluftdruck reagiert werden. In Horizontalrichtung getrennte Belüftungssektoren ermöglichen es, bei Wind die Luv- und die Lee-Seite des Gebäudes mit einem unterschiedlichen Überdruck zu beaufschlagen.

Wenn die Vorrichtung zum Verändern des Luftdurchlaßquerschnitts eine Rückschlageinrichtung aufweist, so kann hierdurch, beispielsweise bei auf der Luv-Seite des Gebäudes anstehenden Windböen, ein Luftübertritt von der äußeren Umgebung in den Raum bzw. von dem Raum in den Verteilerkanal zumindest erschwert, wenn nicht gar vollständig verhindert werden.

Wie in der vorstehenden Diskussion bereits angeklungen ist, kann der wenigstens eine Verteilerkanal von einem Flur des Gebäudes gebildet sein. Es ist jedoch ebenso möglich, daß der wenigstens eine Verteilerkanal von einem gesonderten Verteilerschacht gebildet ist. Auch können beide Lösungen parallel zum Einsatz kommen, beispielsweise können normale Büroräume über den ihnen zugeordneten Flur mit Frischluft versorgt werden, während ein vom selben Flur her zugänglicher Konferenz- bzw. Besprechungsraum über einen gesonderten Verteilerschacht mit Frischluft versorgt wird. Die Verteilerschacht-Lösung ist zwar konstruktiv geringfügig aufwendiger, hat dafür aber den Vorteil, für eine gleichmäßigere Verteilung der Frischluft zu sorgen. Bei der Belüftung von Großraumbüros ist daher die Verwendung von Verteilerschächten anzuraten. Die Verteilerschächte können sowohl in einem Deckenhohlraum als auch in einem Fußbodenhohlraum angeordnet, bzw. von diesen gebildet sein. An den Enden der Verteilerschächte können beispielsweise herkömmliche Drallauslässe angeordnet sein.

Da bei dem erfindungsgemäßen Gebäude aufgrund des von der Belüftungsvorrichtung im Inneren des Gebäudes erzeugten Überdrucks und der hieraus resultierenden Luftströmungsrichtung die bei den Gebäuden des Stands der Technik auftretenden Probleme vermieden werden, kann das erfindungsgemäße Gebäude mit einer Einfachfassade ausgebildet sein.

Bei dem erfindungsgemäßen Gebäude kann weiterhin vorgesehen sein, daß wenigstens einer der Räume ein öffenbares Fenster aufweist.

Im Hinblick auf die Einflüsse hoher Windgeschwindigkeiten wird ferner vorgeschlagen, daß wenigstens ein Fenster als Kastenfenster ausgebildet ist. Dabei kann die äußere Fenstereinheit des Kastenfensters vorteilhafterweise mit einer Prallscheibe ausgebildet sein, welche beispielsweise mit einem ringsumlaufenden Luftspalt ausgebildet ist. Wird in diesem Fall die innere Fenstereinheit des Kastenfensters geöffnet, so wird das Anstehen eines starken Winds von der das Fenster öffnenden Person in Form eines vergleichsweise schwachen Luftzugs bemerkt, so daß sie vernünftigerweise die äußere Fenstereinheit nicht öffnen wird. Aber selbst wenn sie die äußere Kastenfenstereinheit auch noch öffnet, so führt dies gemäß vorstehender Beschreibung nicht zum Zusammenbruch der Funktion der gesamten Belüftungsanlage, sondern der sich ergebende starke Luftzug hat lediglich auf diesen einen Raum nachteilige Auswirkungen.

Die Klimatisierungswirkung kann im Bedarfsfalle dadurch weiter verstärkt werden, daß dem wenigstens einen durch das Erdreich verlaufenden Kanalabschnitt ein Wärmeaustauscher zugeordnet ist. Sollte die Klimatisierung durch das Erdreich wider Erwarten einmal nicht ausreichen, so kann dies dadurch kompensiert werden, daß man dem wenigstens einen Lüftungshauptkanal eine Heizvorrichtung oder/und eine Kühlvorrichtung zuordnet.

Das Vorsehen derartiger zentraler Kühl- bzw. Heizvorrichtungen ermöglicht es überdies, die den einzelnen Räumen zugeordneten dezentralen Kühl- bzw. Heizvorrichtungen relativ leistungsarm zu dimensionieren, was sich auf deren Anschaffungskosten günstig auswirkt.

Die vorstehend angesprochene Klimatisierungswirkung ist bei niedrigen Gebäuden von Interesse, beispielsweise Einfamilienhäusern mit bis zu drei Etagen einschließlich Dachgeschoß. Derartige Gebäude werden, wie dies beispielsweise in den Vereinigten Staaten von Amerika schon seit längererem üblich ist, in letzter Zeit auch in Europa vermehrt in Holz- bzw. Leichtbauweise erstellt. Da bei diesen Bauweisen kein bzw. erheblich weniger Mauerwerk verwendet wird, weisen diese Gebäude im Vergleich mit Steinhäusern, welche beispielsweise aus Ziegel und dergleichen Baustoffen erstellt sind, ein deutlich niedrigeres Wärmespeichervermögen auf. Dies hat im Sommer zur Folge, daß sie auch nicht ansatzweise in der Lage sind, die tageszeitlichen Temperaturschwankungen auszugleichen oder zumindest abzuschwächen. Zum Ausgleich dieser für die Bewohner unangenehmen Effekte kommen bei in Leicht- oder Holzbauweise errichteten Gebäuden verstärkt Klimaanlagen zum Einsatz. Darüber hinaus kühlen die vorstehend diskutierten Holz- bzw. Leichtbau-Gebäude aufgrund ihres geringeren thermischen Puffervermögens im Winter rasch aus, was durch verstärktes Heizen ausgeglichen werden muß.

Leitet man nun, wie vorstehend erfindungsgemäß vorgeschlagen, zumindest einen Teil der aus der Umgebung angesaugten Luft durch das Erdreich und ermöglicht durch Einsatz eines Wärmeaustauschers oder durch entsprechende Bemessung der Länge des durch das Erdreich verlaufenden Kanalabschnitts einen Wärmeaustausch zwischen der Luft und dem Erdreich, so kann die Wärmespeicherkapazität des Erdreichs genutzt werden, um das fehlende Wärmespeichervermögen des Gebäudes auszugleichen. Im Sommer wird die angesaugte Luft durch das Erdreich gekühlt, während sie im Winter erwärmt wird. Selbstverständlich müssen bei Ermöglichung des Wärmeaustauschs alleine durch entsprechend lange Bemessung des durch das Erdreich verlaufenden Leitungsabschnitts die jeweiligen Bedingungen am Einsatzort berücksichtigt werden. Beispielsweise kommt man dann, wenn der Leitungsabschnitt durch das Grundwasser verlegt werden kann, mit einer relativ kurzen Wegstrecke aus, während man bei Kies den Leitungsabschnitt vergleichsweise lang bemessen muß. Insgesamt ist festzuhalten, daß die Anzahl und die Länge der durch das Erdreich verlaufenden Leitungsabschnitte von den jeweiligen geologischen Gegebenheiten abhängen.

Zusätzlich oder alternativ können die Leitungsabschnitte auch in Bauteilen, wie z.B. Fundamente, Bohrpfähle, Bodenplatten oder Außenwände mit Erdkontakt geführt werden, wenn dies aus technischen oder wirtschaftlichen Gründen sinnvoll ist.

In Weiterbildung der Erfindung wird vorgeschlagen, daß in den Räumen oder/und dem wenigstens einen Verteilerkanal oder/und dem wenigstens einen Lüftungshauptkanal Anschlußstellen zur Einbringung von durch Fremdwärmequellen erwärmter Luft vorgesehen sind. Derartige Fremdwärmequellen können beispielsweise Wintergärten, Großwäschereien, Großküchen und dergleichen sein, deren Abluft entweder direkt oder über Wärmetauscher- oder/und Filteranlagen in das Belüftungssystem eingeleitet wird. Die mit der Wärmeeinleitung von derartigen Fremdwärmequellen möglicherweise verbundene Luftzufuhr in das Belüftungssystem führt allenfalls zu einer Erhöhung des Überdrucks, die letztendlich durch eine Absenkung der Leistung der Belüftungsvorrichtung wieder ausgeglichen wird.

Da die angesaugte Luft im Anschluß an das Durchlaufen des im Erdreich verlaufenden Kanalabschnitts in im wesentlichen vertikal verlaufenden Kanalabschnitten zu den jeweiligen Belüftungssektoren bzw. Etagen des Gebäudes geführt wird und das diese vertikalen Kanalabschnitte umgebende Gebäude sowohl im Winter (aufgrund des Heizungsbetriebs) als auch im Sommer (insbesondere infolge thermischer Aufheizung durch Sonneneinstrahlung) eine höhere Temperatur aufweist als die angesaugte Luft, erwärmt sich diese Luft in den vertikalen Kanalabschnitten. Diese Erwärmung verleiht der Luft einen thermischen Auftrieb, d.h. eine Eigenbewegung in der gewünschten Luftförderrichtung. Aufgrund dieses Effekts kann es sogar vorkommen, daß die Belüftungsvorrichtung zeitweise abgestellt werden kann, in welchem Fall die Frischluftzufuhr allein durch die beschriebene thermische Förderwirkung aufrechterhalten wird. Ja, es kann sogar vorkommen, daß die thermische Förderwirkung zu einem unerwünscht hohen Überdruck in dem Gebäude führen würde.

Es wird daher ferner vorgeschlagen, daß dem wenigstens einen Lüftungshauptkanal eine Drosselvorrichtung zugeordnet ist, die dazu dient, gegebenenfalls dem Aufbau eines zu hohen Belüftungsdrucks entgegenzuwirken. Die Belüftungsvorrichtung und die Drosselvorrichtung können von ein und derselben Vorrichtung gebildet sein, beispielsweise einer Luftschraubenanordnung, die im Druckbetrieb als Gebläse und im Drosselbetrieb als Turbine arbeitet, so daß die Belüftungsvorrichtung im Drosselbetrieb sogar zur Stromerzeugung genutzt werden kann. Es ist jedoch auch möglich, daß in dem wenigstens einen Lüftungshauptkanal eine Drosselklappe angeordnet ist, welche es ermöglicht, die Luftzufuhr in das Gebäude zu drosseln oder/und im wesentlichen vollständig zu unterbinden.

Die Belüftungsvorrichtung kann in einem Servicebereich des Gebäudes angeordnet sein, beispielsweise im Keller oder einer Service-Etage des Gebäudes.

Die Lüftungshauptkanäle, insbesondere deren Steigabschnitte, können von gesonderten Schächten des Gebäudes gebildet bzw.in gesonderten Schächten des Gebäudes angeordnet sein, die ausschließlich Versorgungszwecken dienen. Zusätzlich zur Belüftung des Gebäudes können diese Schächte auch zur Führung von Leitungen für elektrischen Strom, Wasser und dergleichen genutzt werden. Im Hinblick auf eine möglichst raumsparende Ausbildung der Belüftungsanlage einerseits und eine dennoch ausreichende Belüftung des Gebäudes andererseits kann die Querschnittsfläche eines Lüftungshauptkanals höchstens 20 m², vorzugsweise höchstens 10 m², betragen. Sie ist in Abhängigkeit von Gebäudegröße, gewünschter Luftströmungsgeschwindigkeit und dem verfügbaren Raum zu optimieren.

Die zum Betrieb der Belüftungsvorrichtung erforderliche elektrische Energie kann tagsüber in einfacher Weise mittels einer photovoltaischen Anlage bereitgestellt werden. Diese Ausführungsvariante hat den zusätzlichen Vorteil einer Vereinfachung der Steuerung der Belüftungsvorrichtung, da bei erhöhter Sonneneinstrahlung nicht nur der Belüftungsbedarf, sondern auch die von der Photovoltaik-Anlage bereitgestellte Menge elektrischer Energie ansteigt. Somit ist stets eine angemessene Energieversorgung für die Belüftungsvorrichtung sichergestellt.

Nachzutragen ist noch, daß dem wenigstens einen Lüftungshauptkanal je nach Wunsch eine ganze Reihe weiterer Vorrichtungen zugeordnet sein können. Beispielsweise kann zur Reinigung der angesaugten Luft ein Staub oder/und Pollenfilter vorgesehen sein. Ferner kann ein Luftbefeuchter vorgesehen sein. Ja man könnte zur Erzeugung eines angenehmen Raumklimas sogar an eine Parfümierung der angesaugten Luft denken.

Schließlich kann in dem wenigstens einen Lüftungshauptkanal ein Temperatursensor zum Erfassen der Temperatur der angesaugten Luft vorgesehen sein. Das von diesem Temperatursensor bereitgestellte Temperatursignal kann von der Steuereinheit bei der Einstellung der in das Gebäude zuzuführenden Luftmenge berücksichtigt werden.

Wie sich bereits aus der vorstehenden Diskussion der Klimatisierung niedriger Gebäude, beispielsweise Einfamilienhäusern, ergibt, kann die erfindungsgemäße Belüftungsvorrichtung aber auch bei Gebäuden mit gleichmäßigem Druckprofil an der Außenseite sinnvoll verwirklicht werden. Im Sommer geht es dabei hauptsächlich darum, die durch Sonneneinstrahlung und andere Effekte, beispielsweise durch Computer und dergleichen elektrische Geräte, aufgeheizte Raumluft nach außen zu verdrängen und die an der sonnenseitigen Fassade aufgeheizte Außenluft daran zu hindern, in das Gebäude einzudringen.

Unter Vernachlässigung der spezifischen Gegebenheiten einzelner Gebäude kann man verallgemeinernd sagen, daß die mit der erfindungsgemäßen Belüftungsvorrichtung erzielbare Klimatisierungswirkung gegenüber der reinen Belüftung des Gebäudes umso mehr in den Vordergrund rückt, je niedriger das Gebäude ist. Hinsichtlich der Belüftung erreicht die Erfindung ihre größte Effizienz jedoch dort, wo die Forderungen von Bauvorschriften und dergleichen durch das erfindungsgemäße Überdruck-Belüftungssystem auf einfache Weise erfüllt werden können, während ihnen bei Gebäuden des Standes der Technik bislang nur durch den Einsatz aufwendiger Technik entsprochen werden konnte.

Wie vorstehend bereits mehrfach angeklungen ist, betrifft die Erfindung nach einem weiteren Gesichtspunkt eine Belüftungsvorrichtung für ein erfindungsgemäßes Gebäude, welche wenigstens einen Lüftungshauptkanal mit einem durch das Erdreich bzw. durch ein mit dem Erdreich in Wärmeaustausch stehendes Baukonstruktionsteil verlaufenden Kanalabschnitt, wenigstens einen in dem Lüftungshauptkanal angeordneten Ventilator, und eine Steuereinheit zur Steuerung des Betriebs des Ventilators umfaßt. Hinsichtlich der möglichen Ausführungsvarianten und der mit dieser Belüftungsvorrichtung erzielbaren Vorteile sei auf die vorstehende Diskussion des erfindungsgemäßen Gebäudes verwiesen.

Schließlich betrifft die Erfindung einen Bausatz für eine erfindungsgemäße Belüftungsvorrichtung. Wie vorstehend mehrfach erwähnt worden ist, kann die erfindungsgemäße Belüftungsvorrichtung vorzugsweise bei niedrigen Gebäuden, wie Einfamilienhäusern, sowohl bei einem bereits bestehenden Gebäude nachträglich eingebaut werden als auch bei der Konzeption eines neuen Gebäudes vorgesehen werden. Nun sind die Besitzer niedriger Gebäude nicht nur bei der Errichtung von Neubauten, sondern auch bei der Nachrüstung fertiger Gebäude üblicherweise bestrebt, möglichst viele Arbeiten in Eigenleistung zu erbringen, um die Kosten für die Nachrüstung bzw. den Neubau möglichst niedrig zu halten. In diesem Bestreben werden sie durch den erfindungsgemäßen Bausatz unterstützt, der ihnen die zum Bau der erfindungsgemäßen Belüftungsvorrichtung erforderlichen Bauteile aufeinander abgestimmt und in einem Paket zusammengestellt anbietet. Hinsichtlich weiterer Vorteile des erfindungsgemäßen Bausatzes sei auf die vorstehende Beschreibung verwiesen.

Die Erfindung wird im folgenden anhand der beiliegenden Zeichnungen an Ausführungsbeispielen näher erläutert werden. Es stellt dar:
- Figur 1: eine grobschematische, geschnittene Seitenansicht eines Gebäudes zur Erläuterung der Erfindung;
- Figur 2: eine schematische Draufsicht eines Raums des Gebäudes gemäß Fig. 1;
- Figur 3: eine vergrößerte Ansicht des Details A in Figur 2;
- Figur 4: eine geschnittene Seitenansicht des Details A längs der Linie IV-IV in Figur 3;
- Figuren 5a, 6a und 7a: schematische Draufsichten auf Teile von Etagen erfindungsgemäßer Gebäude; und
- Figuren 5b, 6b und 7b: schematische Stirnansichten der Etagen gemäß Figuren 5a, 6a bzw. 7a in Richtung der Pfeile V, VI bzw. VII.

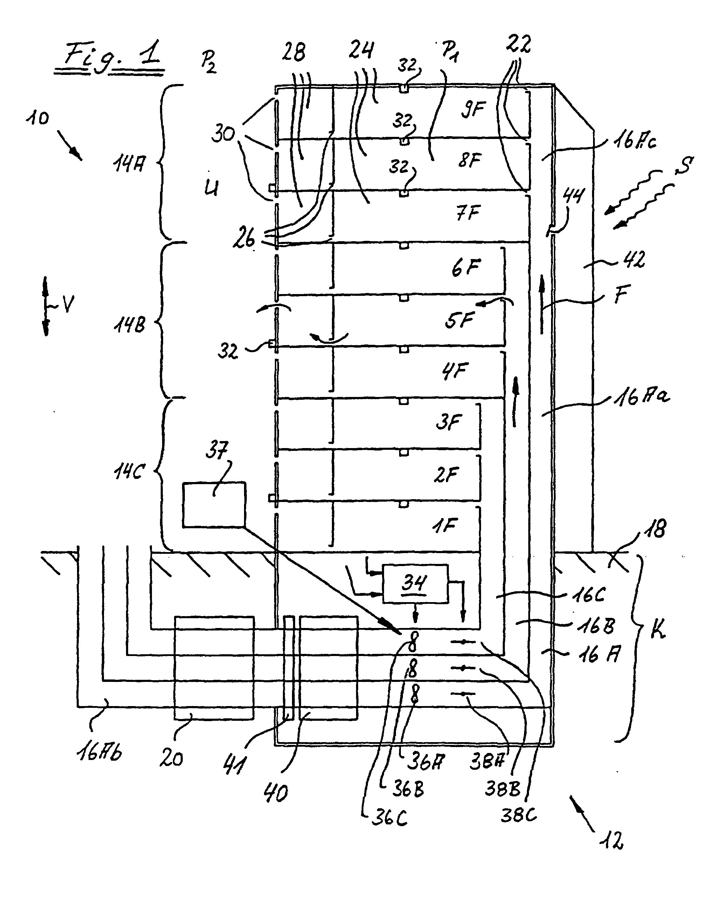

In Figur 1 ist ein allgemein mit 10 bezeichnetes Gebäude dargestellt, das mit einer Belüftungsanlage 12 ausgerüstet ist. Die Belüftungsanlage 12 ist in drei in Vertikalrichtung V übereinander angeordnete Belüftungssektoren 1 4A, 14B und 14C aufgeteilt. Jedem der Belüftungssektoren 14A bis 14C sind drei der Etagen 1F bis 9F des Gebäudes zugeordnet. Darüber hinaus ist jedem der Belüftungssektoren 14A bis 14C ein gesonderter Lüftungshauptkanal 16A bis 16C zugeordnet. In dem dargestellten Ausführungsbeispiel sind die Belüftungssektoren 14A bis 14C im wesentlichen identisch ausgebildet. Daher wird im folgenden der einfacheren Darstellung halber lediglich der Aufbau des Belüftungssektors 14A, des ihm zugeordneten Lüftungshauptkanals 16A und der weiteren diesem Belüftungssektor 14A zugeordneten Vorrichtungen erläutert werden.

Der Lüftungshauptkanal 16A weist einen im wesentlichen vertikal verlaufenden Steigabschnitt 16Aa und einen Ansaugabschnitt 16Ab auf. Im dargestellten Ausführungsbeispiel verläuft der Ansaugabschnitt 16Ab durch das Erdreich 18, wodurch die angesaugte Luft infolge des Wärmeaustausches mit dem Erdreich 18 im Winter erwärmt und im Sommer abgekühlt wird. Die Effizienz des Wärmeaustauschs zwischen angesaugter Luft und Erdreich 18 kann durch Einsatz eines dem Ansaugabschnitt 16Ab zugeordneten Wärmeaustauschers 20 noch erhöht werden.

Da die erwärmte bzw. abgekühlte Luft beim Eintritt in den Steigabschnitt 16Aa sowohl im Winter als auch im Sommer normalerweise eine niedrigere Temperatur aufweist als das Gebäude 10, erwärmt sich die angesaugte Luft in dem Steigabschnitt 16Aa. Infolge dieser Erwärmung dehnt sich die angesaugte Luft aus, was ihr in dem Steigabschnitt 16Aa Auftrieb verleiht. Infolge dieses thermischen Effekts kommt es somit zu einer Luftförderung in Richtung des Pfeils F. Im Bereich des oberen Endes 16Ac des Steigabschnitts 16Aa tritt die Luft infolge der vorstehend beschriebenen Förderwirkung durch Austrittsöffnungen 22 in die Flure 24 der dem Leitungshauptkanal 16A zugeordneten Etagen 7F, 8F und 9F aus. Dort kommt es infolge der Luftzufuhr zu einem Druckanstieg, der die Luft durch Übertrittsöffnungen 26 in die den Fluren 24 zugeordneten Räume 28 und schließlich durch Austrittsöffnungen 30 zurück in die äußere Umgebung U fördert.

Erfindungsgemäß wird das Gebäude 10 zur Belüftung also in seinem Inneren mit einem Überdruck beaufschlagt, der die zentral zugeführte Frischluft durch die Flure in die Räume und weiter zurück in die äußere Umgebung drückt. Die Belüftung des Gebäudes 10 erfolgt also von innen nach außen, wie dies beispielhaft für die Belüftung der Etage 5F mit geschwungenen Pfeilen angedeutet ist.

Für eine ordnungsgemäße Funktion der Belüftungsanlage 12 ist es erwünscht, daß der im Inneren des Gebäudes herrschende Druck, insbesondere der in den Fluren 24 herrschende Druck P1, stets um eine vorbestimmte Druckdifferenz ΔP über dem in der äußeren Umgebung U herrschenden Druck P2 liegt, wobei selbstverständlich Schwankungen der Druckdifferenz ΔP in bestimmten Grenzen toleriert werden. Die Druckdifferenz ΔP beträgt vorzugsweise etwa 30 Pa. Zur Erfassung der jeweils herrschenden Drücke sind in den Fluren und an der Außenseite des Gebäudes Drucksensoren 32 angeordnet. Darüber hinaus können auch in den Lüftungshauptkanälen 16A bis 16C und den Räumen 28 des Gebäudes 10 (nicht dargestellte) Drucksensoren vorgesehen sein.

Die Drucksignale der Drucksensoren 32 werden an eine Steuereinheit 34 weitergeleitet, die überprüft, ob für die einzelnen Belüftungssektoren 14A bis 14C die Druckdifferenz ΔP innerhalb des vorgegebenen Regelbereich von beispielsweise ± 10 Pa liegt. Sollte die thermische Förderwirkung F in einem der Steigabschnitte 16A bis 16C zur Aufrechterhaltung der gewünschten Druckdifferenz ΔP nicht genügen, so setzt die Steuereinheit 34 ein dem jeweiligen Lüftungshauptkanal zugeordnetes Gebläse 36A, 36B bzw. 36C in Betrieb, um die Gesamtförderrate auf einen zur Aufrechterhaltung des gewünschten Druckunterschieds ΔP ausreichenden Wert zu erhöhen. Sollte hingegen aufgrund extremer thermischer Verhältnisse die thermische Förderleistung F zu einem zu hohen Überdruck in dem Gebäude 10 führen, so steuert die Steuereinheit 34 Drosselklappen 38A bzw. 38B bzw. 38C an, die zu einer entsprechenden Reduzierung der Förderrate führen.

In einer alternativen Ausführungsform kann auch vorgesehen sein, daß die Gebläse 36A bis 36C auch zur Drosselung der Förderrate eingesetzt werden, beispielsweise indem sie als Turbine eingesetzt werden und einen Teil der thermischen Förderleistung in elektrische Leistung umsetzen, oder indem sie gar in Gegenströmungsrichtung betrieben werden.

Die zum Betrieb der Gebläse 36A bis 36C erforderliche elektrische Energie wird bei dem in Figur 1 dargestellten Ausführungsbeispiel tagsüber von einer Photovoltaik-Anlage 37 bereitgestellt. Diese kann natürlich in der Fassade des Gebäudes 10 integriert oder auf dem Dach des Gebäudes 10 angeordnet sein. Da sowohl der Belüftungsbedarf als auch der zugeordnete zum Antrieb der Gebläse 36A bis 36C benötigte Energiebedarf als auch die von der Photovoltaik-Anlage 37 gelieferte elektrische Leistung mit zunehmender Sonneneinstrahlung ansteigen, kann die Ansteuerung der Gebläse 36A bis 36C zumindest vereinfacht werden, da stets eine ausreichende Energiezufuhr zu den Gebläsen sichergestellt ist. Im günstigsten Fall kann auf eine derartige Steuerung sogar vollständig verzichtet werden; die "Steuerung" der Gebläse wird dann ausschließlich der Sonne überlassen.

Den Belüftungshauptkanälen 16A bis 16C kann darüber hinaus ein zentrales Kühl- bzw. Heizaggregat 40 zugeordnet sein, so daß die angesaugte Luft vor dem Eintritt in den Arbeits- bzw. Wohnbereich des Gebäudes 10 auf Temperaturen gebracht werden kann, die von den sich in dem Gebäude 10 aufhaltenden Personen als angenehm empfunden werden. Mit Hilfe (nicht dargestellter) dezentraler Heiz- bzw. Kühlvorrichtungen in den Räumen 28 und den Fluren 24 können dann noch individuelle Temperaturanpassungen vorgenommen werden.

Darüber hinaus ermöglicht die erfindungsgemäße Belüftungsanlage 12 die Einleitung von durch Fremdwärmequellen erwärmter Luft. Im Ausführungsbeispiel gemäß Figur 1 verfügt das Gebäude 10 über einen Wintergarten 42, in dem sich die Luft infolge von Sonneneinstrahlung S erwärmt. Die erwärmte Luft kann im Bedarfsfall über eine Klappenanordnung 44 in den Steigabschnitt 16Aa des Belüftungshauptkanals 16A eingeleitet werden. Die Betätigung der Klappenanordnung 44 kann dezentral, d.h. insbesondere unabhängig von der Steuereinheit 34, erfolgen, beispielsweise thermostatgesteuert. Dabei ist sichergestellt, daß die Zufuhr zusätzlicher Luftmengen in das Belüftungssystem dessen Funktion nicht beeinträchtigt, denn die durch die zusätzlichen Luftmengen hervorgerufene Druckerhöhung in den Fluren und Räumen wird von den Drucksensoren 32 erfaßt und zieht eine entsprechende Minderung der Förderrate durch den entsprechenden Lüftungshauptkanal nach sich. Obgleich dies in Figur 1 nicht dargestellt ist, können der Klappenanordnung 44 entsprechende Klappenanordnungen auch zwischen dem Wintergarten 42 und den Lüftungshauptkanälen 16B und 16C der anderen Belüftungssektoren 14B und 14C vorgesehen sein. Als weitere Fremdwärmequellen kommen beispielsweise in dem Gebäude vorgesehene Großküchen oder Wäschereien in Betracht, wobei in diesem Fall der zusätzliche Einsatz von Filteranordnungen bzw. Wärmeaustauschern empfehlenswert ist.

Wie in Figur 1 grobschematisch bei 41 dargestellt ist, können auch in den Lüftungshauptkanälen 16A, 16B und 16C Filteranordnungen, beispielsweise Staub- und Pollenfilter, vorgesehen sein. Darüber hinaus kann die angesaugte Luft befeuchtet oder/und mit Duftstoffen versetzt werden, um für ein angenehmes Raumklima zu sorgen.

Anzumerken ist ferner, daß gemäß Figur 1 sämtliche zum Betrieb der Belüftungsanlage 12 erforderlichen großtechnischen Geräte im Kellerbereich K des Gebäudes 10 angeordnet sind. Es ist jedoch auch möglich, zumindest einige der großtechnischen Geräte in Servicebereichen von Etagen bzw. ganzen Service-Etagen anzuordnen.

Bei dem in Figur 1 dargestellten Gebäude 10 ist die Belüftungsanlage 12 in drei vertikal übereinander angeordnete Belüftungsabschnitte 14A bis 14C unterteilt. Hierdurch kann beispielsweise der Tatsache Rechnung getragen werden, daß der in der äußeren Umgebung U herrschende Druck P2 mit zunehmender Höhe über dem Erdboden abnimmt. Zur Erzielung eines vorbestimmten Druckunterschieds ΔP genügt daher im Belüftungsabschnitt 14A ein entsprechend geringerer Innendruck P1 als im Belüftungsabschnitt 14C. Darüber hinaus wird der äußere Umgebungsdruck P2 aber auch von den Windverhältnissen beeinflußt. So herrscht beispielsweise an der Luv-Seite des Gebäudes 10 ein höherer Außendruck P2 als an der Lee-Seite dieses Gebäudes. Auf diesen strömungsdynamischen Effekt kann beispielsweise durch die Unterteilung des Gebäudes in mehrere horizontal voneinander getrennte Belüftungssektoren reagiert werden. Zur Erfassung der äußeren Druckverhältnisse ist eine der gewünschten Erfassungsgenauigkeit entsprechende Anzahl von Drucksensoren 32 an der Außenfassade 10 anzuordnen.

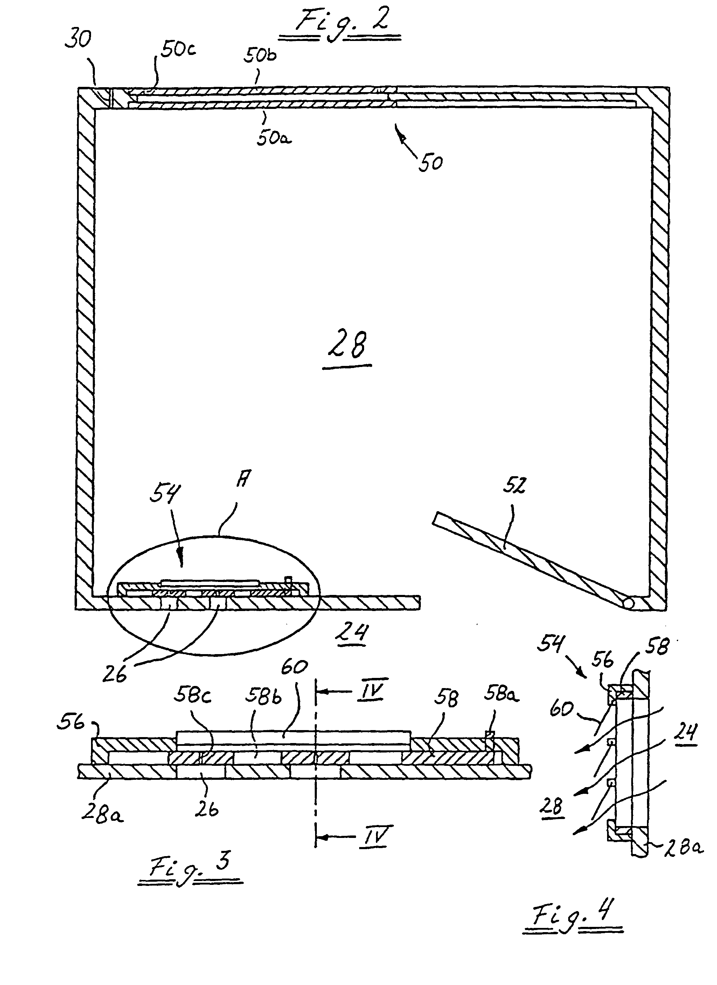

In Figur 2 ist grobschematisch der beispielhafte Aufbau eines Raums 28 des Gebäudes 10 dargestellt. Der Raum 28 weist eine Fensteranordnung 50 und eine Tür 52 auf und verfügt darüber hinaus über die vorstehend bereits angesprochenen Übertrittsöffnungen 26 und die Austrittsöffnungen 30.

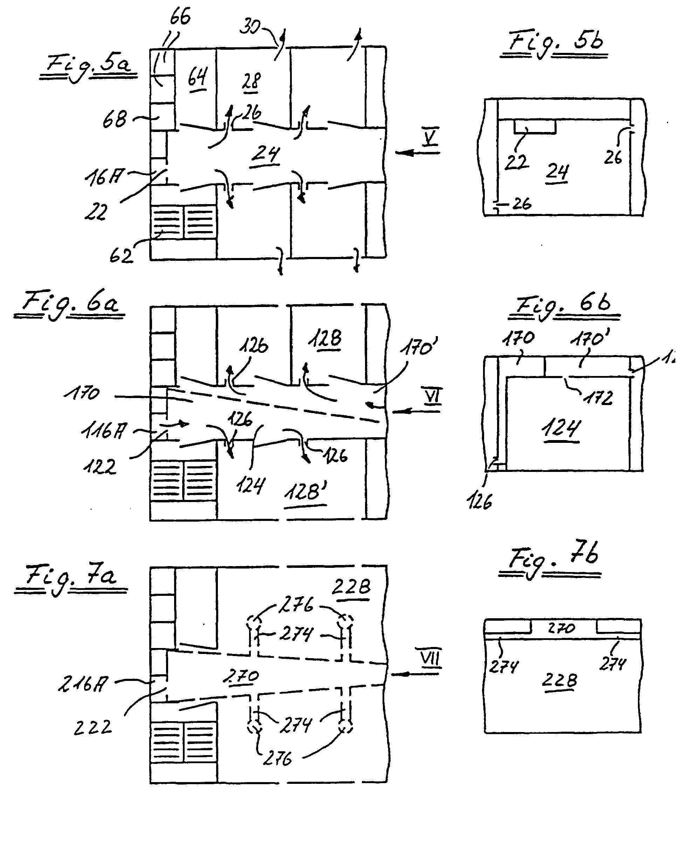

Die Übertrittsöffnungen 26, mit deren Hilfe Luft vom Flur 24 auch bei geschlossener Tür 52 in den Raum 28 gelangen kann, sind im Bereich einer Schiebereinrichtung 54 ausgebildet, deren Aufbau mit Bezug auf Figur 3 und 4 näher erläutert werden soll.

An einer Wand 28a des Raums 28 ist eine Führung 56 angebracht, in der ein Schieber 58 geführt ist. Der Schieber 58 kann mittels eines Betätigungselements 58a von einer sich in dem Raum 28 aufhaltenden Person von Hand verstellt werden. Der Schieber 58 weist den Übertrittsöffnungen 26 der Wand 28a entsprechende Durchbrechungen 5815 auf, die mit den Übertrittsöffnungen 26 stufenlos außer Überdeckung, in beliebige teilweise Überdeckung oder vollständige Überdeckung gebracht werden können. In Figur 3 befinden sich die Öffnungen 26 und 58b außer Überdeckung. Die Schiebereinrichtung 54 befindet sich demgemäß in ihrer Schließstellung. Eine sich in dem Raum 28 aufhaltende Person kann somit die Zufuhr von Frischluft vom Flur 24 in den Raum 28 ihren persönlichen Bedürfnissen individuell anpassen.

Um den Bauvorschriften zu genügen, die auch im geschlossenen Zustand des Raums 28 stets eine minimale Zwangsbelüftung fordern, sind in dem Schieber 58 Perforationen 58c vorgesehen, die im Schließzustand der Schiebereinrichtung 54 einen Luftdurchtritt vom Flur durch die Übertrittsöffnungen 26 in den Raum 28 ermöglichen. Die Schiebereinrichtung 54 ist darüber hinaus mit Rückschlagklappen 60 versehen, die lediglich eine Luftströmung vom Flur 24 in den Raum 28 zulassen (vgl. Figur 4), eine Luftströmung vom Raum 28 in den Flur 24 jedoch unterbinden.

Die Fensterkonstruktion 50 ist gemäß Figur 2 als Schiebe-Kastenfenster ausgebildet, obgleich selbstverständlich auch andere Fenstertypen, seien es Flügel-Kastenfenster, einfache Schiebefenster, einfache Flügelfenster oder dergleichen zum Einsatz kommen können. In dem dargestellten Ausführungsbeispiel können sowohl die innere Kastenfestereinheit 50a als auch die äußere Kastenfenstereinheit 50b beliebig weit geöffnet werden, so daß die sich in dem Raum 28 aufhaltende Person die Belüftungsverhältnisse auch mittels des Fensters 50 ihren individuellen Bedürfnissen anpassen kann.

Die äußere Kastenfenstereinheit 50b ist dabei als Prallscheibe ausgebildet, d.h. sie weist im Bereich des Fensterrahmens oder auch in der Glasscheibe selber Öffnungen 50c auf. Wird nun beispielsweise bei starkem Sturm die innere Kastenfenstereinheit 50a geöffnet, so wird infolge des Sturms ein deutlich spürbarer Luftstrom durch die Öffnungen 50c der äußeren Kastenfenstereinheit 50b gedrückt, so daß die das Fenster öffnende Person auf die extremen Windverhältnisse aufmerksam gemacht und insbesondere davon abgehalten wird, auch die äußere Kastenfenstereinheit 50b zu öffnen. Wiederum im Hinblick auf die vorstehend genannten Bauvorschriften sind im Bereich der Fenstereinheit 50 zudem auch die Austrittsöffnungen 30 vorgesehen, die eine minimale Luftströmungsrate zur äußeren Umgebung hin gewährleisten.

Zu ergänzen ist noch, daß auch die Tür 52 zur Anpassung der Luftströmungsverhältnisse in dem Raum 28 an die individuellen Bedürfnisse der sich in diesem Raum aufhaltenden Person eingesetzt werden kann.

Wie sich aus vorstehender Beschreibung ergibt, stellt die erfindungsgemäße Belüftungsanlage geringste architektonische Anforderungen, da sie eine weitgehende Reduktion der für ihren Betrieb erforderlichen großtechnischen Geräte erlaubt. Darüber hinaus ist die erfindungsgemäße Belüftungsanlage 12 konstruktiv und insbesondere auch regeltechnisch einfach aufgebaut. Die eigentliche Regelung der Belüftungsverhältnisse wird von den sich in den Räumen 28 des Gebäudes 10 aufhaltenden Personen von Hand vorgenommen, sei es durch Öffnen und Schließen von Fenstern und Türen oder durch Betätigung der Schiebereinrichtung 54. Die Übernahme dieser Regelungsaufgabe wird von diesen Personen jedoch nicht als nachteilig, sondern im Gegenteil als äußerst vorteilhaft empfunden, da es ihnen die Anpassung der Belüftungsverhältnisse an ihre individuellen Bedürfnisse ermöglicht. Die Belüftungsanlage reagiert lediglich auf die ihr vorgegebenen Bedingungen, indem sie die Luftzufuhrrate zu den einzelnen Belüftungssektoren derart einstellt, daß in diesen Sektoren die erwünschte Druckdifferenz ΔP zwischen dem Innendruck P1 und dem Außendruck P2 aufrechterhalten wird. Die Steuereinheit 34 der Belüftungsanlage 12 benötigt hierzu lediglich die Erfassungssignale einer Reihe von Drucksensoren 32.

Wie im folgenden erläutert werden wird, hat die erfindungsgemäße Belüftungsanlage 12 darüber hinaus den Vorteil, daß in einzelnen Räumen 28 versehentlich, fahrlässig oder vorsätzlich eingestellte extreme Belüftungsverhältnisse keinen nachteiligen Einfluß auf den Betrieb der gesamten Belüftungsanlage 12 haben können:

Wird die Tür eines Raumes bei geschlossenem Fenster geöffnet, so kommt es hierdurch zunächst zu einer erhöhten Luftzufuhr in den Raum, was zu einem geringfügigen Druckabfall im Flur führt. Dieser Druckabfall wird jedoch von den Drucksensoren erfaßt und führt zu einer entsprechenden Erhöhung der Förderleistung der diesen Flur versorgenden Teilbelüftungsanordnung, um den erwünschten Druckunterschied zwischen diesem Flur und der äußeren Umgebung wieder herzustellen. Bleibt die Tür geöffnet, so kommt es zum Druckausgleich zwischen dem Raum und dem Flur, letztendlich jedoch auf dem für diesen Belüftungssektor erwünschten Druckwert. Wird die Tür wieder geschlossen, so stellt sich der Luftdruck in dem Raum allmählich wieder auf einen zwischen dem erwünschten Innendruck P1 und dem Außendruck P2 liegenden Wert ein.

Wird bei geschlossener Tür das Fenster geöffnet, so kommt es zu einem Druckausgleich zwischen der äußeren Umgebung und dem Raum, die lediglich eine geringfügige Erhöhung des Luftdurchsatzes durch die Übertrittsöffnung 26 zur Folge hat. Fährt eine Windbö in den Raum, so hat dies aufgrund der Drosselwirkung der Übertrittsöffnungen 26 praktisch keine Auswirkungen auf den im Flur herrschenden Luftdruck P1. Ist die Schiebereinrichtung 54 überdies mit Rückschlagklappen 60 ausgestattet, so kann sich die Windbö überhaupt nicht auf die Druckverhältnisse im Flur auswirken.

Sind Tür und Fenster geöffnet, so kommt es zu einem steten Luftzug vom Flur durch den Raum in die äußere Umgebung. Die mit diesem Luftzug in die äußere Umgebung abgeführte Luftmenge wird von der Belüftungsanlage 12 nachgeliefert, so daß der Druckunterschied ΔP aufrechterhalten wird. Im Maximum wird die in dem Raum arbeitende Person den sich ergebenden Luftzug als unangenehm empfinden und Tür oder/und Fenster schließen, so daß sich der vorherige Zustand wieder einstellt.

Fährt bei geöffneter Tür und geöffnetem Fenster eine Windbö in den Raum, so kann sich diese bis in den Flur hin fortsetzen. Die Windbö führt jedoch allenfalls zu einer Druckerhöhung in dem Flur, auf die die Belüftungsanlage mit einer entsprechenden Minderung der Förderrate reagiert. Auf benachbarte Räume kann sich die Windbö nicht nachteilig auswirken. Da sich die Tür 52 aus feuerschutztechnischen Gründen in den Raum hinein öffnet, besteht eine hohe Wahrscheinlichkeit dafür, daß die Windbö die Tür 52 zuschlägt.

Zugegebenermaßen kann die erfindungsgemäße Belüftungsanlage dann, wenn sämtliche Türen und Fenster vorsätzlich gleichzeitig geöffnet werden, den erwünschten Überdruck in dem Gebäude 10 nicht aufrechterhalten, auch wenn sie in diesem Fall mit maximaler Förderleistung arbeitet. Unter den genannten Bedingungen ist aber eine ausreichende Frischluftzufuhr von der äußeren Umgebung durch die Räume in die Flure sichergestellt. Diese extremste aller denkbaren Belüftungssituationen braucht aber regelungstechnisch nicht notwendigerweise berücksichtigt zu werden, denn nach Schließen wenigstens eines Teils der Türen und Fenster stellt sich der erwünschte Überdruck in dem Gebäude 10 automatisch wieder ein.

In den Figuren 5a, 5b, 6a, 6b, 7a und 7b sind schematisch verschiedene Möglichkeiten dargestellt, die zugeführte Frischluft von dem Steigabschnitt des Belüftungshauptkanals auf die verschiedenen Räume zu verteilen.

Bei dem in den Figuren 5a und 5b dargestellten Ausführungsbeispiel erfolgt diese Verteilung so, wie dies vorstehend für das anhand der Figuren 1 bis 4 erläuterte Gebäude 10 beschrieben worden ist. Von dem Belüftungshauptkanal 16a gelangt die zugeführte Luft durch die Öffnung 22 in den Flur 24, der in diesem Ausführungsbeispiel als Verteilerkanal fungiert. Von dort tritt die Luft durch die Öffnungen 26 in die Räume 28 ein, bevor sie diese über die Austrittsöffnungen 30 wieder verläßt. Wie in Figur 5b dargestellt ist, können die Luftübertrittsöffnungen 26 sowohl in der Nähe des Bodens als auch in der Nähe der Decke oder an einer beliebigen, dazwischen angeordneten Position vorgesehen sein. In Figur 5a erkennt man darüber hinaus ein Treppenhaus 62 sowie einen Vorraum 64 mit Aufzügen 66 und einem separaten Versorgungsschacht 68. Dem Flur 24 ist ein einziger Lüftungshauptkanal 1 6a zugeordnet.

In dem Ausführungsbeispiel gemäß den Figuren 6a und 6b gelangt die Luft aus dem Belüftungshauptkanal 116A durch die Übertrittsöffnung 122 in einen (gestrichelt dargestellten) Verteilerschacht 170, von dem aus sie durch Übertrittsöffnungen 126 in die Räume 128 gelangt. Dem Flur 124 sind in dem Ausführungsbeispiel gemäß Figur 6a zwei derartige Verteilerschächte 170 und 170' zugeordnet, die jeweils von einem gesonderte Belüftungshauptkanal gespeist sind. Dem Flur 124 sind also zwei Belüftungshauptkanäle zugeordnet. Ein Konferenzraum 128' wird mittels zweier Übertrittsöffnungen 126 gespeist. Gemäß Figur 6b wird der Flur 124 ebenfalls von den Verteilerschächten 170 bzw. 170' aus versorgt, und zwar über Austrittsöffnungen 172 (siehe Figur 6b). Ansonsten entspricht die Ausführungsform gemäß Figuren 6a und 6b der Ausführungsform gemäß Figuren 5a und 5b, auf deren Beschreibung hiermit verwiesen wird.

Im Ausführungsbeispiel gemäß Figuren 7a und 7b erfolgt die Verteilung der zugeführten Frischluft, ausgehend vom Belüftungshauptkanal 216A über die Austrittsöffnung 222, den Verteilerschacht 270, Stichleitungen 274 und herkömmliche Drallauslässe 276 direkt in ein Großraumbüro 228 hinein. Hinsichtlich der weiteren Details der Ausführungsform gemäß Figuren 7a und 7b sei wiederum auf die Beschreibung des Ausführungsbeispiels gemäß Figuren 5a und 5b verwiesen.

Im Unterschied zu dem vorstehend anhand der Figuren 1 bis 7 geschilderten Fall der Anwendung der erfindungsgemäßen Belüftungsvorrichtung bei einem Hochhaus kommt man bei einem niedrigen Gebäude, wie beispielsweise einem Einfamilienhaus, üblicherweise mit einem einzigen Lüftungshauptkanal aus. Der außerhalb des Hauses durch das Erdreich verlaufende Kanalabschnitt kann dabei beispielsweise von einem flexiblen Kunststoffrohr gebildet sein, wie es im Bauhandel oder auch in Heimwerkermärkten erhältlich ist. Die Länge des im Erdreich verlegten Kanalabschnitts ist dabei so zu bemessen, daß die angesaugte Luft bei der durch den vorgesehenen Luftdurchsatz und den Rohrquerschnitt vorgegebenen Strömungsgeschwindigkeit ausreichend Zeit hat, um an den Kanalwandungen mit dem umgebenden Erdreich in Wärmeaustauschkontakt zu treten. Die zu verlegende Rohrlänge hängt selbstverständlich auch von den geologischen Umgebungsbedingungen ab. Wird das Rohr im Erdreich beispielsweise von Grundwasser umspült, so genügt eine erheblich kürzere Rohrlänge als in dem Fall, in dem das Rohr in Kies verlegt ist.

Die Ansaugöffnung des Lüftungshauptkanals sollte bevorzugt an einer geschützten Stelle auf der sonnenabgewandten Seite des Gebäudes angeordnet sein, um im Sommer das Ansaugen möglichst kühler Luft sicherzustellen. Darüber hinaus sollte die Ansaugöffnung an einer Stelle angeordnet sein, die in ausreichendem Abstand zu von Kraftfahrzeugen befahrenen Flächen, also beispielsweise Straßen, Garagenzufahrten oder dergleichen, gelegen ist, um das Ansaugen sauberer Luft sicherstellen zu können. Ferner sollte die Ansaugöffnung mit einem Gitter abgedeckt sein, um das Eindringen von Mäusen und dergleichen Ungeziefer verhindern zu können.

Hinsichtlich der Möglichkeiten, die angesaugte Luft zu befeuchten, zu erwärmen bzw. zu kühlen, zu filtern, mit Duftstoffen zu versetzen und dergleichen mehr, unterscheidet sich die Belüftungsvorrichtung für ein niedriges Gebäude in ihren möglichen Ausführungsvarianten nicht von dem vorstehend erläuterten Hochhaus. Auch hinsichtlich der verschiedenen Ausführungsmöglichkeiten der Drosselvorrichtung entspricht es diesem.

Was die Einleitung und Verteilung der angesaugten Luft in dem Einfamilienhaus anbelangt, so sind verschiedende Varianten denkbar:

In der einfachsten Ausführungsvariante wird die angesaugte und erwärmte Luft einfach im Keller des Gebäudes im Bereich des Treppenhauses ausgelassen und verteilt sich von dort über das Treppenhaus und die Flure über die Räume des Gebäudes. Entsprechend der vorstehend beim Hochhaus gemäß Fig. 1 verwendeten Terminologie bildet dabei das Treppenhaus einen im wesentlichen vertikal verlaufenden Steigabschnitt des Lüftungshauptkanals, während die Flure die Verteilerkanäle bilden. Diese Ausführungsvariante eignet sich besonders zur Nachrüstung bereits bestehender Gebäude.

Ein weiterer Ausbauschritt kann darin bestehen, daß man beispielsweise im Treppenhaus des Gebäudes auf Putz einen vertikal verlaufenden Lüftungsschacht verlegt, welcher eine Mehrzahl von Luftauslässen aufweist. Dies ermöglicht eine gleichmäßigere Belüftung des Gebäudes und kann ebenfalls bei einem bereits fertiggestellten Gebäude nachgerüstet werden.

Beim Neubau von Gebäuden können darüber hinaus Verteilerschächte zu den einzelnen Räumen vorgesehen sein. Auch kann der vertikale Lüftungsschacht als Teil des Lüftungshauptkanals in die Baukonstruktion integriert werden.

In jeder dieser Ausführungsformen ist an den Lüftungsauslässen vorzugsweise eine sogenannte "Jalousien-Rückschlagklappe" vorgesehen, weiche in jedem Fall eine Umkehrung der Luftströmung verhindert. Auch diesbezüglich sei auf die Erläuterungen zu dem Hochhaus gemäß Fig. 1 verwiesen. Auch hinsichtlich der von den Fluren zu den Räumen und von den Räumen zur äußeren Umgebung gebildeten Luftdurchlässe kann das Einfamilienhaus, insbesondere in seiner Komfortvariante, dem Hochhaus gemäß Fig. 1 entsprechend ausgebildet sein.

## Patentansprüche

1. Niedriges Gebäude (10), insbesondere ein Einfamilienhaus, umfassend:
wenigstens einen mit der äußeren Umgebung (U) in Luftübertrittsverbindung stehenden Lüftungshauptkanal (16A, 16B, 16C), und
wenigstens einen Verteilerkanal (24), welcher zum einen mit dem wenigstens einen Lüftungshauptkanal (16A, 16B, 16C) und zum anderen mit Räumen (28) des Gebäudes (10) in Luftübertrittsverbindung steht, wobei die Räume (28) ihrerseits mit der äußeren Umgebung (U) des Gebäudes (10) in Luftübertrittsverbindung stehen, wobei dem wenigstens einen Lüftungshauptkanal (16A, 16B, 16C) eine Belüftungsvorrichtung (36A, 36B, 36C) zugeordnet ist zum Erzeugen oder/und Aufrechterhalten eines Belüftungsdrucks, dessen Wert (P1) größer ist als der Wert (P2) des in der äußeren Umgebung (U) herrschenden Drucks,
wobei zwischen dem wenigstens einen Verteilerkanal (24) und einem mit diesem in Luftübertrittsverbindung stehenden Raum (28) oder/und zwischen wenigstens einem der Räume (28) und der äußeren Umgebung (U) eine von Hand verstellbare Vorrichtung (54 bzw. 50) vorgesehen ist zum Verändern des Luftdurchlassquerschnitts, wobei diese Vorrichtung (54 bzw. 50) zum Verändern des Luftdurchlassquerschnitts einen endlichen minimalen Luftdurchlassquerschnitt (58c bzw. 30) aufweist,
und wobei der wenigstens eine Lüftungshauptkanal (1 6A, 16B, 16C) einen durch das Erdreich bzw. durch ein mit dem Erdreich (18) in Wärmeaustausch stehendes Baukonstruktionsteil verlaufenden Kanalabschnitt 16Ab) aufweist.

2. Gebäude nach Anspruch 1,
**dadurch gekennzeichnet, daß** eine Steuereinheit (34) zur Steuerung des Betriebs der Belüftungsvorrichtung (36A, 36B, 36C) vorgesehen ist.

3. Gebäude nach Anspruch 1 oder 2,
**dadurch gekennzeichnet, daß** an der Außenseite des Gebäudes (10) sowie in den Verteilerkanälen (24) oder/und dem wenigstens einen Lüftungshauptkanal (16A, 16B, 16C) Drucksensoren (32) vorgesehen sind zur Erfassung des am jeweiligen Ort herrschenden Luftdrucks.

4. Gebäude nach einem der Ansprüche 1 bis 3,
**dadurch gekennzeichnet, daß** das Gebäude (10) in eine Mehrzahl von Belüftungssektoren (14A, 14B, 14C) unterteilt ist, denen jeweils mindestens ein Lüftungshauptkanal (16A, 16B, 16C) zugeordnet ist.

5. Gebäude nach einem der Ansprüche 1 bis 4,
**dadurch gekennzeichnet, daß** die Vorrichtung (54) zum Verändern des Luftdurchlaßquerschnitts eine Rückschlageinrichtung (60) aufweist, welche einen Luftübertritt von der äußeren Umgebung in den Raum bzw. von dem Raum (28) in den zugeordneten Verteilerkanal (24) zumindest erschwert.

6. Gebäude nach einem der Ansprüche 1 bis 5,
**dadurch gekennzeichnet, daß** wenigstens einer der Verteilerkanäle von einem Flur (24) des Gebäudes (10) gebildet ist.

7. Gebäude nach einem der Ansprüche 1 bis 6,
**dadurch gekennzeichnet, daß** wenigstens einer der Verteilerkanäle von einem gesonderten Verteilerschacht (170, 170'; 270) gebildet ist.

8. Gebäude nach einem der Ansprüche 1 bis 7,
**dadurch gekennzeichnet, daß** das Gebäude (10) eine Einfachfassade aufweist.

9. Gebäude nach einem der Ansprüche 1 bis 8,
**dadurch gekennzeichnet, daß** wenigstens einer der Räume (28) ein öffenbares Fenster (50) aufweist.

10. Gebäude nach einem der Ansprüche 1 bis 9,
**dadurch gekennzeichnet, daß** wenigstens ein Fenster (50) des Gebäudes (10) als Kastenfenster ausgebildet ist.

11. Gebäude nach Anspruch 10,
**dadurch gekennzeichnet, daß** die äußere Fenstereinheit (50b) des Kastenfensters (50) mit einer Prallscheibe ausgebildet ist.

12. Gebäude nach einem der Ansprüche 1 bis 11,
**dadurch gekennzeichnet, daß** dem wenigstens einen durch das Erdreich verlaufenden Kanalabschnitt (16Ab) ein Wärmeaustauscher (20) zugeordnet ist.

13. Gebäude nach einem der Ansprüche 1 bis 12,
**dadurch gekennzeichnet, daß** dem wenigstens einen Lüftungshauptkanal (16A, 16B, 16C) eine Drosselvorrichtung (38A, 38B, 38C) zugeordnet ist, welche dazu dient, gegebenenfalls dem Aufbau eines zu hohen Belüftungsdrucks entgegenzuwirken.

14. Gebäude nach Anspruch 13,
**dadurch gekennzeichnet, daß** die Belüftungsvorrichtung und die Drosselvorrichtung von ein und derselben Vorrichtung gebildet sind, beispielsweise einer Luftschraubenanordnung, die im Druckbetrieb als Gebläse und im Drosselbetrieb als Turbine arbeitet.

15. Gebäude nach einem der Ansprüche 1 bis 14,
**dadurch gekennzeichnet, daß** dem wenigstens einen Lüftungshauptkanal (16A, 16B, 16C) eine Heizvorrichtung (40) oder/und eine Kühlvorrichtung (40) zugeordnet ist.

16. Gebäude nach einem der Ansprüche 1 bis 15,
**dadurch gekennzeichnet, daß** in den Räumen oder/und den Verteilerkanälen oder/und dem wenigstens einen Lüftungshauptkanal (16A) Anschlußstellen (44) vorgesehen sind zur Einbringung von durch Fremdwärmequellen (42) erwärmter Luft.

17. Gebäude nach einem der Ansprüche 1 bis 16,
**dadurch gekennzeichnet, daß** die Belüftungsvorrichtung (36A, 36B, 36C) in einem Servicebereich (K) des Gebäudes angeordnet ist, beispielsweise im Keller oder einer Service-Etage des Gebäudes.

18. Gebäude nach einem der Ansprüche 1 bis 17,
**dadurch gekennzeichnet, daß** die Querschnittsfläche eines Lüftungshauptkanals (16A, 16B, 16C) höchstens 20 m², vorzugsweise höchstens 10 m², beträgt.

19. Gebäude nach einem der Ansprüche 1 bis 18,
**dadurch gekennzeichnet, daß** der Wert des Druckunterschieds zwischen Gebäudeinnendruck und Umgebungsdruck zwischen 10 Pa und 80 Pa, vorzugsweise etwa 30 Pa, beträgt.

20. Gebäude nach einem der Ansprüche 1 bis 19,
**dadurch gekennzeichnet, daß** der Belüftungsvorrichtung eine Photovoltaik-Vorrichtung (37) zur Erzeugung des zum Betrieb der Belüftungsvorrichtung erforderlichen elektrischen Stroms zugeordnet ist.

21. Gebäude nach einem der Ansprüche 1 bis 20,
**dadurch gekennzeichnet, dass** in dem wenigstens einen Lüftungshauptkanal (16A, 16B, 16C) eine Filteranordnung (41) vorgesehen ist, beispielsweise eine Staub- und/oder Pollenfilteranordnung.

22. Gebäude nach einem der Ansprüche 1 bis 21,
**dadurch gekennzeichnet, dass** in dem wenigstens einen Lüftungshauptkanal (16A, 16B, 16C) eine Vorrichtung (41) zum Befeuchten oder/und Parfümieren der angesaugten Luft vorgesehen ist.

23. Gebäude nach einem der Ansprüche 1 bis 22,
**dadurch gekennzeichnet, dass** in dem wenigstens einen Lüftungshauptkanal (16A, 16B, 16C) ein Temperatursensor zum Erfassen der Temperatur der angesaugten Luft vorgesehen ist.

24. Gebäude nach Anspruch 13,
**dadurch gekennzeichnet, dass** in dem wenigstens einen Lüftungshauptkanal (16A, 16B, 16C) eine Drosselklappe (38A, 38B, 38C) angeordnet ist, welche es ermöglicht, die Luftzufuhr in das Gebäude zu drosseln oder/und im Wesentlichen vollständig zu unterbinden.

25. Belüftungsvorrichtung für ein Gebäude (10) nach einem der Ansprüche 1 bis 24, umfassend:
- wenigstens einen Lüftungshauptkanal (16A, 16B, 16C) mit einem durch das Erdreich (18) bzw. durch ein mit dem Erdreich in Wärmeaustausch stehendes Baukonstruktionsteil verlaufenden Kanalabschnitt (16Ab)und
- wenigstens einen in dem Lüftunghauptkanal (16A, 16B, 16C) angeordnetes Ventilator (36A, 36B, 36C),
**dadurch gekennzeichnet, dass** eine Steuereinheit (34) zur Steuerung des Betriebs des Ventilators (36A, 36B, 36C) vorgesehen ist und dass dem wenigstens einen Lüftungshauptkanal (16A, 16B, 16C) eine Drosselvorrichtung (38A, 38B, 38C) zugeordnet ist, Welche dazu dient, gegebenenfalls dem Aufbau eines zu hohen Belüftungsdrucks entgegenzuwirken.

26. Belüftungsvorrichtung nach Anspruch 25,
**dadurch gekennzeichnet, dass** dem wenigstens einen durch das Erdreich bzw. durch das mit dem Erdreich in Wärmeaustausch stehende Baukonstruktionsteil verlaufenden Kanalabschnitt (16Ab) ein Wärmeaustauscher (20) zugeordnet ist.

27. Belüftungsvorrichtung nach Anspruch 25 oder 26,
**dadurch gekennzeichnet, dass** dem wenigstens einen Lüftungshauptkanal (16A, 16B, 16C) eine Heizvorrichtung (40) oder/und eine Kühlvorrichtung (40) zugeordnet ist.

28. Belüftungsvorrichtung nach einem der Ansprüche 25 bis 27,
**dadurch gekennzeichnet, dass** ihr eine Photovoltaik-Vorrichtung (37) zur Erzeugung des zum Betrieb des wenigstens einen Ventilators (36A, 36B, 36C) erforderlichen elektrischen Stroms zugeordnet ist.

29. Belüftungsvorrichtung nach einem der Ansprüche 25 bis 28,
**dadurch gekennzeichnet, dass** in dem wenigstens einen Lüftungshauptkanal (16A, 16B, 16C) eine Filteranordnung (41) vorgesehen ist, beispielsweise eine Staub- oder/und Pollenfilteranordnung.

30. Belüftungsvorrichtung nach einem der Ansprüche 25 bis 29,
**dadurch gekennzeichnet, dass** in dem wenigstens einen Lüftungshauptkanal (16A, 16B, 16C) eine Vorrichtung (41) zum Befeuchten oder/und Parfümieren der angesaugten Luft vorgesehen ist.

31. Belüftungsvorrichtung nach einem der Ansprüche 25 bis 30,
**dadurch gekennzeichnet, dass** der Ventilator und die Drosselvorrichtung von ein und derselben Vorrichtung gebildet sind, beispielsweise einer Luftschraubenanordnung, die im Druckbetrieb als Gebläse und im Drosselbetrieb als Turbine arbeitet.

32. Belüftungsvorrichtung nach einem der Ansprüche 25 bis 30,
**dadurch gekennzeichnet, dass** in dem wenigstens einen Lüftungshauptkanal (16A, 16B, 16C) eine Drosselklappe (38A, 38B, 38C) angeordnet ist, welche es ermöglicht, die Luftzufuhr in das Gebäude zu drosseln oder/und im Wesentlichen vollständig zu unterbinden.

33. Belüftungsvorrichtung nach einem der Ansprüche 25 bis 32,
**dadurch gekennzeichnet, dass** zur Anordnung an der Außenseite des Gebäudes (10) sowie in dem wenigstens einen Verteilerkanal (24) oder/und dem wenigstens einen Lüftungshauptkanal (16A, 16B, 16C) bestimmten Drucksensoren (32) vorgesehen sind zur Erfassung des am jeweiligen Ort herrschenden Luftdrucks.

34. Bausatz für eine Belüftungsvorrichtung nach einem der Ansprüche 25 bis 33, umfassend:
- wenigstens einen Kanalabschnitt (16Ab), der dazu bestimmt ist, im Erdreich (18) bzw. in einem mit dem Erdreich in Wärmeaustausch stehenden Baukonstruktionsteil verlegt zu werden,
- wenigstens einen Ventilator (36A, 36B, 36C),
- eine Steuereinheit (34) zur Steuerung des Betriebs des Ventilators (36A, 36B, 36C), und
- eine Drosselvorrichtung (38A, 38B, 38C), beispielsweise eine Drosselklappe (38A, 38B, 38C).

35. Bausatz nach Anspruch 34,
**dadurch gekennzeichnet, dass** er ferner wenigstens eine der folgenden Vorrichtungen aufweist:
- einen Wärmeaustauscher (20),
- eine Heizvorrichtung (40) und/oder eine Kühlvorrichtung (40),
- eine Photovoltaik-Vorrichtung (37),
- eine Filteranordnung (41),
- eine Vorrichtung (41) zum Befeuchten oder/und Parfürmieren der angesaugten Luft,
- wenigstens einen Luftdrucksensor (32),
- wenigstens einen Temperatursensor.

## Claims

1. Low-level building (10), in particular a house, comprising:
at least one main ventilation channel (16A, 16B, 16C) which is in air-transfer connection with the exterior surroundings (U), and
at least one distributor channel (24) which is in air-transfer connection, on the one hand, with the at least one main ventilation channel (16A, 16B, 16C) and, on the other hand, with rooms (28) of the building (10), the rooms (28) for their part, being in air-transfer connection with the exterior surroundings (U) of the building (10), and the at least one main ventilation channel (16A, 16B, 16C) being assigned a ventilating arrangement (36A, 36B, 36C) for producing and/or maintaining a ventilating pressure with a value (P1) greater than the value (P2) of the pressure prevailing in the exterior surroundings (U),
there being provided between the at least one distributor channel (24) and a room (28) which is in air-transfer connection therewith, and/or between at least one of the rooms (28) and the exterior surroundings (U), a manually adjustable arrangement (54 or 50) for changing the air-passage cross section, this arrangement (54 or 50) for changing the air-passage cross section having a finite minimal air-passage cross section (58c or 30),
and the at least one main ventilation channel (16A, 16B, 16C) having a channel section (16Ab) running through the ground or through a structural part which exchanges heat with the ground (18).

2. Building according to Claim 1, **characterized in that** a control unit (34) is provided for controlling the operation of the ventilating arrangement (36A, 36B, 36C).

3. Building according to Claim 1 or 2, **characterized in that** provided on the outside of the building (10) and in the distributor channels (24) and/or the at least one main ventilation channel (16A, 16B, 16C) are pressure sensors (32) for sensing the air pressure prevailing at the respective location.

4. Building according to one of Claims 1 to 3, **characterized in that** the building (10) is subdivided into a plurality of ventilating sectors (14A, 14B, 14C) which are each assigned at least one main ventilation channel (16A, 16B, 16C).

5. Building according to one of Claims 1 to 4, **characterized in that** the arrangement (54) for changing the air-passage cross section has a non-return device (60) which at least makes it more difficult for air to be transferred from the exterior surroundings into the room and/or from the room (28) into the associated distributor channel (24).

6. Building according to one of Claims 1 to 5, **characterized in that** at least one of the distributor channels is formed by a hall or passage (24) of the building (10).

7. Building according to one of Claims 1 to 6, **characterized in that** at least one of the distributor channels is formed by a separate distributor shaft (170, 170'; 270).

8. Building according to one of Claims 1 to 7, **characterized in that** the building (10) has a single facade.

9. Building according to one of Claims 1 to 8, **characterized in that** at least one of the rooms (28) has an openable window (50).

10. Building according to one of Claims 1 to 9, **characterized in that** at least one window (50) of the building (10) is designed as a box-type window.

11. Building according to Claim 10, **characterized in that** the outer window unit (50b) of the box-type window (50) is formed with a baffle.

12. Building according to one of Claims 1 to 11, **characterized in that** the at least one channel section (16Ab) running through the ground is assigned a heat exchanger (20).

13. Building according to one of Claims 1 to 12, **characterized in that** the at least one main ventilation channel (16A, 16B, 16C) is assigned a throttling arrangement (38A, 38B, 38C) which serves for counteracting, if appropriate, the build-up of an excessively high ventilating pressure.

14. Building according to Claim 13, **characterized in that** the ventilating arrangement and the throttling arrangement are formed by one and the same arrangement, for example an airscrew arrangement which operates as a fan during pressure operation and as a turbine during throttling operation.

15. Building according to one of Claims 1 to 14, **characterized in that** the at least one main ventilation channel (16A, 16B, 16C) is assigned a heating arrangement (40) and/or a cooling arrangement (40).

16. Building according to one of Claims 1 to 15, **characterized in that** provided in the rooms and/or the distributor channels and/or the at least one main ventilation channel (16A) are connection locations (44) for the introduction of air which is heated by external heat sources (42).

17. Building according to one of Claims 1 to 16, **characterized in that** the ventilating arrangement (36A, 36B, 36C) is arranged in a service area (K) of the building, for example in the cellar or a service storey of the building.

18. Building according to one of Claims 1 to 17, **characterized in that** the cross-sectional surface area of a main ventilation channel (16A, 16B, 16C) is not more than 20 m², preferably not more than 10 m².

19. Building according to one of Claims 1 to 18, **characterized in that** the value of the difference in pressure between the pressure inside the building and the ambient pressure is between 10 Pa and 80 Pa, preferably approximately 30 Pa.

20. Building according to one of Claims 1 to 19, **characterized in that** the ventilating arrangement is assigned a photovoltaic arrangement (37) for generating the electric current which is necessary for operating the ventilating arrangement.

21. Building according to one of Claims 1 to 20, **characterized in that** a filter arrangement (41), for example a dust-filter and/or pollen-filter arrangement, is provided in the at least one main ventilation channel (16A, 16B, 16C).

22. Building according to one of Claims 1 to 21, **characterized in that** an arrangement (41) for humidifying and/or perfuming the air which is taken in is provided in the at least one main ventilation channel (16A, 16B, 16C).

23. Building according to one of Claims 1 to 22, **characterized in that** a temperature sensor for sensing the temperature of the air which is taken in is provided in the at least one main ventilation channel (16A, 16B, 16C).

24. Building according to Claim 13, **characterized in that** a throttle valve (38A, 38B, 38C) is arranged in the at least one main ventilation channel (16A, 16B, 16C), this valve making it possible to throttle and/or suppress essentially altogether the feed of air into the building.

25. Ventilating arrangement for a building (10) according to one of Claims 1 to 24, comprising:
- at least one main ventilation channel (16A, 16B, 16C) with a channel section (16Ab) running through the ground (18) or through a structural part which exchanges heat with the ground, and
- at least one ventilator (36A, 36B, 36C) arranged in the main ventilation channel (16A, 16B, 16C),
**characterized in that** a control unit (34) is provided for controlling the operation of the ventilator (36A, 36B, 36C), and **in that** the at least one main ventilation channel (16A, 16B, 16C) is assigned a throttling arrangement (38A, 38B, 38C) which serves for counteracting, if appropriate, the build-up of an excessively high ventilating pressure.

26. Ventilating arrangement according to Claim 25, **characterized in that** the at least one channel section (16Ab) running through the ground or through the structural part which exchanges heat with the ground is assigned a heat exchanger (20).

27. Ventilating arrangement according to Claim 25 or 26, **characterized in that** the at least one main ventilation channel (16A, 16B, 16C) is assigned a heating arrangement (40) and/or a cooling arrangement (40).

28. Ventilating arrangement according to one of Claims 25 to 27, **characterized in that** it is assigned a photovoltaic arrangement (37) for generating the electric current which is necessary for operating the at least one ventilator (36A, 36B, 36C).

29. Ventilating arrangement according to one of Claims 25 to 28, **characterized in that** a filter arrangement (41), for example a dust-filter and/or pollen-filter arrangement, is provided in the at least one main ventilation channel (16A, 16B, 16C).

30. Ventilating arrangement according to one of Claims 25 to 29, **characterized in that** an arrangement (41) for humidifying and/or perfuming the air which is taken in is provided in the at least one main ventilation channel (16A, 16B, 16C).

31. Ventilating arrangement according to one of Claims 25 to 30, **characterized in that** the ventilator and the throttling arrangement are formed by one and the same arrangement, for example an airscrew arrangement which operates as a fan during pressure operation and as a turbine during throttling operation.

32. Ventilating arrangement according to one of Claims 25 to 30, **characterized in that** a throttle valve (38A, 38B, 38C) is arranged in the at least one main ventilation channel (16A, 16B, 16C), this valve making it possible to throttle and/or suppress essentially altogether the feed of air into the building.

33. Ventilating arrangement according to one of Claims 25 to 32, **characterized in that** pressure sensors (32) intended for arranging on the outside of the building (10) and in the at least one distributor channel (24) and/or the at least one main ventilation channel (16A, 16B, 16C) are provided for sensing the air pressure prevailing at the respective location.

34. Construction kit for a ventilating arrangement according to one of Claims 25 to 33, comprising:
- at least one channel section (16Ab), which is intended for laying in the ground (18) or in a structural part which exchanges heat with the ground,
- at least one ventilator (36A, 36B, 36C),
- a control unit (34) for controlling the operation of the ventilator (36A, 36B, 36C), and
- a throttling arrangement (38A, 38B, 38C), for example a throttle valve (38A, 38B, 38C).

35. Construction kit according to Claim 34, **characterized in that** it also has at least one of the following arrangements:
- a heat exchanger (20),
- a heating arrangement (40) and/or a cooling arrangement (40),
- a photovoltaic arrangement (37),
- a filter arrangement (41),
- an arrangement (41) for humidifying and/or perfuming the air which is taken in,
- at least one air-pressure sensor (32),
- at least one temperature sensor.

## Revendications

1. Bâtiment bas (10), notamment maison individuelle, comprenant:
au moins une canalisation d'aération principale (16A, 16B, 16C) qui est en liaison de passage d'air avec l'environnement extérieur (U) et
au moins une canalisation de distribution (24) qui est en liaison de passage d'air d'une part avec la canalisation d'aération principale (16A, 16B, 16C), au nombre d'une au moins, et d'autre part avec des locaux (28) du bâtiment (10), les locaux (28) se trouvant pour leur part en liaison de passage d'air avec l'environnement extérieur (U) du bâtiment (10), un dispositif d'aération (36A, 36B, 36C) pour la génération et/ou le maintien d'une pression d'aération, dont la valeur (P1) est supérieure à la valeur (P2) de la pression régnant dans l'environnement extérieur (U), étant associé à la canalisation d'aération principale (16A, 16B, 16C), au nombre d'une au moins,
un dispositif à réglage manuel (54, resp. 50) étant prévu entre la canalisation de distribution (24) au nombre d'une au moins et un local (28) qui est en liaison de passage d'air avec cette dernière ou/et entre au moins l'un des locaux (28) et l'environnement extérieur (U), pour modifier la section transversale de passage d'air, ledit dispositif (54, resp. 50) pour modifier la section transversale de passage d'air présentant une section transversale minimale de passage d'air sur son extrémité (58c, resp. 30),
et la canalisation d'aération principale (16A, 16B, 16C) au nombre d'une au moins étant munie d'un tronçon de canalisation (16Ab) s'étendant à travers le terrain ou à travers un élément de construction qui est en liaison d'échange thermique avec le terrain (18).

2. Bâtiment selon la revendication 1, **caractérisé en ce qu'**une unité de commande (34) est prévue pour commander le fonctionnement du dispositif d'aération (36A, 36B, 36C).

3. Bâtiment selon la revendication 1 ou 2, **caractérisé en ce que** des capteurs de pression (32) sont prévus sur la face extérieure du bâtiment (10), ainsi que dans les canalisations de distribution (24) ou/et dans la canalisation d'aération principale (16A, 16B, 16C) au nombre d'une au moins, pour détecter la pression d'air régnant à l'endroit respectif.

4. Bâtiment selon l'une des revendications 1 à 3, **caractérisé en ce que** le bâtiment (10) est divisé en une pluralité de secteurs d'aération (14A, 14B, 14C), auxquels est associée respectivement au moins une canalisation d'aération principale (16A, 16B, 16C).

5. Bâtiment selon l'une des revendications 1 à 4, **caractérisé en ce que** le dispositif (54) pour modifier la section transversale de passage d'air est muni d'un système anti-retour (60), qui fait au moins obstacle à un passage d'air dans la pièce à partir de l'environnement extérieur ou de la pièce (28) vers la canalisation de distribution associée (24).

6. Bâtiment selon l'une des revendications 1 à 5, **caractérisé en ce qu'**au moins l'une des canalisations de distribution est formée par un corridor (24) du bâtiment (10).

7. Bâtiment selon l'une des revendications 1 à 6, **caractérisé en ce qu'**au moins l'une des canalisations de distribution est formée par une gaine de distribution séparée (170, 170' ; 270).

8. Bâtiment selon l'une des revendications 1 à 7, **caractérisé en ce que** le bâtiment (10) est muni d'une façade simple.

9. Bâtiment selon l'une des revendications 1 à 8, **caractérisé en ce qu'**au moins l'un des locaux (28) est muni d'une fenêtre (50) qu'on peut ouvrir.

10. Bâtiment selon l'une des revendications 1 à 9, **caractérisé en ce qu'**au moins une fenêtre (50) du bâtiment (10) est conçue en tant que fenêtre à caisson.

11. Bâtiment selon la revendication 10, **caractérisé en ce que** l'unité de fenêtre externe (50b) de la fenêtre à caisson (50) est réalisée avec une vitre anti-choc.

12. Bâtiment selon l'une des revendications 1 à 11, **caractérisé en ce qu'**un échangeur thermique (20) est associé au tronçon de canalisation (16Ab) au nombre d'un au moins qui s'étend à travers le terrain.

13. Bâtiment selon l'une des revendications 1 à 12, **caractérisé en ce qu'**un dispositif d'étranglement (38A, 38B, 38C) qui est destiné à contrecarrer le cas échéant la génération d'une pression d'aération trop élevée est associé à la canalisation d'aération principale (16A, 16B, 16C) au nombre d'une au moins.

14. Bâtiment selon la revendication 13, **caractérisé en ce que** le dispositif d'aération et le dispositif d'étranglement sont formés par un seul et même dispositif, par exemple un agencement d'hélices, fonctionnant en tant que soufflerie en régime sous pression et en tant que turbine en régime d'étranglement.

15. Bâtiment selon l'une des revendications 1 à 14, **caractérisé en ce qu'**un dispositif de chauffage (40) ou/et un dispositif de refroidissement (40) est associé à la canalisation d'aération principale (16A, 16B, 16C) au nombre d'une au moins.

16. Bâtiment selon l'une des revendications 1 à 15, **caractérisé en ce que** des zones de raccordement (44) pour l'introduction d'air chauffé par des sources de chauffage tierces (42) sont prévues dans les locaux ou/et dans les canalisations de distribution ou/et dans la canalisation d'aération principale (16A) au nombre d'une au moins.

17. Bâtiment selon l'une des revendications 1 à 16, **caractérisé en ce que** le dispositif d'aération (36A, 36B, 36C) est disposé dans une zone de service (K) du bâtiment, par exemple dans la cave ou dans un étage de service du bâtiment.

18. Bâtiment selon l'une des revendications 1 à 17, **caractérisé en ce que** la surface de section transversale d'une canalisation d'aération principale (16A, 16B, 16C) est au maximum de 20 m², de préférence au maximum de 10 m².

19. Bâtiment selon l'une des revendications 1 à 18, **caractérisé en ce que** la valeur de pression différentielle entre la pression intérieure du bâtiment et la pression environnementale se situe entre 10 Pa et 80 Pa, de préférence à environ 30 Pa.

20. Bâtiment selon l'une des revendications 1 à 19, **caractérisé en ce qu'**un dispositif photovoltaïque (37) pour générer le courant électrique nécessaire au fonctionnement du dispositif d'aération est associé au dispositif d'aération.

21. Bâtiment selon l'une des revendications 1 à 20, **caractérisé en ce qu'**un agencement de filtres (41), par exemple un agencement de filtres à poussière ou à pollen est prévu dans la canalisation d'aération principale (16A, 16B, 16C) au nombre d'une au moins.

22. Bâtiment selon l'une des revendications 1 à 21, **caractérisé en ce qu'**un dispositif (41) pour humidifier ou/et pour parfumer l'air aspiré est prévu dans la canalisation d'aération principale (16A, 16B, 16C) au nombre d'une au moins.

23. Bâtiment selon l'une des revendications 1 à 22, **caractérisé en ce qu'**une sonde thermique est prévue dans la canalisation d'aération principale (16A, 16B, 16C) au nombre d'une au moins, pour détecter la température de l'air aspiré.

24. Bâtiment selon la revendication 13, **caractérisé en ce qu'**un clapet d'étranglement (38A, 38B, 38C) qui permet d'étrangler l'arrivée d'air dans le bâtiment ou/et de la supprimer pratiquement est disposé dans la canalisation d'aération principale (16A, 16B, 16C) au nombre d'une au moins.

25. Dispositif d'aération pour un bâtiment (10) selon l'une des revendications 1 à 24, comprenant :
- au moins une canalisation d'aération principale (16A, 16B, 16C) avec un tronçon de canalisation (16Ab) s'étendant dans le terrain (18) ou dans un élément de construction qui est en liaison d'échange thermique avec le terrain et
- au moins un ventilateur (36A, 36B, 36C) disposé dans la canalisation d'aération principale (16A, 16B, 16C),
**caractérisé en ce qu'**une unité de commande (34) pour commander le fonctionnement du ventilateur (36A, 36B, 36C) est prévue et **en ce qu'**un dispositif d'étranglement (38A, 38B, 38C) destiné à contrecarrer le cas échéant une pression d'aération trop élevée est associé à la canalisation d'aération principale (16A, 16B, 16C) au nombre d'une au moins.

26. Dispositif d'aération selon la revendication 25, **caractérisé en ce qu'**un échangeur thermique (20) est associé au tronçon de canalisation (16Ab) au nombre d'un au moins, s'étendant à travers le terrain, resp. à travers l'élément de construction qui est en liaison d'échange thermique avec le terrain.

27. Dispositif d'aération selon la revendication 25 ou 26, **caractérisé en ce qu'**un dispositif de chauffage (40) ou/et un dispositif de refroidissement (40) est associé à la canalisation d'aération principale (16A, 16B, 16C) au nombre d'une au moins.

28. Dispositif d'aération selon l'une des revendications 25 à 27, **caractérisé en ce qu'**un dispositif photovoltaïque (37) lui est associé, pour générer le courant électrique nécessaire au fonctionnement du ventilateur (36A, 36B, 36C) au nombre d'un au moins.

29. Dispositif d'aération selon l'une des revendications 25 à 28, **caractérisé en ce qu'**un agencement de filtres (41), par exemple un agencement de filtres à poussière ou/et à pollen est prévu dans la canalisation d'aération principale (16A, 16B, 16C) au nombre d'une au moins.

30. Dispositif d'aération selon l'une des revendications 25 à 29, **caractérisé en ce qu'**un dispositif (41) pour humidifier ou/et pour parfumer l'air aspiré est prévu dans la canalisation d'aspiration principale (16A, 16B, 16C) au nombre d'une au moins.

31. Dispositif d'aération selon l'une des revendications 25 à 30, **caractérisé en ce que** le ventilateur et le dispositif d'étranglement sont formés par un seul et même dispositif, par exemple un agencement d'hélices, qui en régime sous pression fonctionne en tant que soufflerie et en régime d'étranglement fonctionne en tant que turbine.

32. Dispositif d'aération selon l'une des revendications 25 à 30, **caractérisé en ce qu'**un clapet d'étranglement (38A, 38B, 38C) qui permet d'étrangler ou/et de supprimer pratiquement l'arrivée d'air dans le bâtiment est disposé dans au moins la canalisation d'aération principale (16A, 16B, 16C).

33. Dispositif d'aération selon l'une des revendications 25 à 32, **caractérisé en ce que** des capteurs de pressions (32) définis, destinés à être disposés sur la face extérieure du bâtiment (10) et dans la canalisation de distribution (24) au nombre d'une au moins ou/et dans la canalisation d'aération principale (16A, 16B, 16C) au nombre d'une au moins sont prévus pour détecter la pression qui règne à l'endroit respectif.

34. Kit pour un dispositif d'aération selon l'une des revendications 25 à 33, comprenant:
- au moins un tronçon de canalisation (16 Ab), qui est destiné à être posé dans le terrain (18) resp. dans un élément de construction qui est en liaison d'échange thermique avec le terrain,
- au moins un ventilateur (36A, 36B, 36C),
- une unité de commande (34), pour commander le fonctionnement du ventilateur (36A, 36B, 36C) et
- un dispositif d'étranglement (38A, 38B, 38C), par exemple un clapet d'étranglement (38A, 38B, 38C).

35. Kit selon la revendication 34, **caractérisé en ce que** par ailleurs, il est doté d'au moins l'un des dispositifs suivants:
- un échangeur thermique (20)
- un dispositif de chauffage (40) et/ou un dispositif de refroidissement (40),
- un dispositif photovoltaïque (37),
- un agencement de filtres (41),
- un dispositif (41) pour humidifier ou/et parfumer l'air aspiré,
- au moins un capteur de pression d'air (32),
- au moins une sonde thermique.
